# EUROPEAN PATENT APPLICATION

(11) **EP 4 503 672 A1**
(43) Date of publication of application: **05.02.2025**
(21) Application number: 23778435.0
(22) Date of filing: 31.03.2023
(51) Int. Cl.: H04W 4/40

(54) **RESOURCE DETERMINATION METHOD AND APPARATUS, TERMINAL AND STORAGE MEDIUM**

(30) Priority: 31.03.2022 CN 202210346817
(71) Applicant: Vivo Mobile Communication Co., Ltd., Dongguan, Guangdong 523863 (CN)
(72) Inventor: WANG, Yuanyuan, Dongguan, Guangdong 523863 (CN); PENG, Shuyan, Dongguan, Guangdong 523863 (CN); SI, Ye, Dongguan, Guangdong 523863 (CN); WU, Huaming, Dongguan, Guangdong 523863 (CN)
(74) Representative: Lavoix
(86) International application number: PCT/CN2023/085388
(87) International publication number: WO 2023/186070

(57) **Abstract**

This application discloses a resource determining method and apparatus, a terminal, and a storage medium, and pertains to the field of communication technologies. The resource determining method according to embodiments of this application includes: determining, by a terminal, a candidate resource of a sidelink positioning reference signal; and determining, by the terminal, a target resource for transmitting the sidelink positioning reference signal from a candidate resource set formed by the candidate resource. The candidate resource includes a candidate time domain resource. Any one of the candidate time domain resource includes at least one of the following: a first time unit, where the first time unit is only used for transmitting the sidelink positioning reference signal; and a second time unit, where the second time unit is used for transmitting the sidelink positioning reference signal and resource determining-related information.

## Description

### CROSS-REFERENCE TO RELATED APPLICATIONS

This application claims priority to Chinese Patent Application No.202210346817.9, filed on March 31, 2022 and entitled "RESOURCE DETERMINING METHOD AND APPARATUS, TERMINAL, AND STORAGE MEDIUM", which is incorporated herein by reference in its entirety.

### TECHNICAL FIELD

This application pertains to the field of communication technologies and specifically relates to a resource determining method and apparatus, a terminal, and a storage medium.

### BACKGROUND

In the related art, sidelinks of a communications system can be used for communication. This is applicable to basic security communication of vehicle to everything (vehicle to everything, V2X) but not to other advanced V2X services.

When a V2X service requires positioning, it is uncertain how sidelink positioning reference signals are transmitted. As a result, positioning cannot be implemented.

### SUMMARY

Embodiments of this application provide a resource determining method and apparatus, a terminal, and a storage medium, so as to solve the problem that positioning cannot be implemented.

A first aspect provides a resource determining method. The method includes:
determining, by a terminal, a candidate resource of a sidelink positioning reference signal; and
determining, by the terminal, a target resource for transmitting the sidelink positioning reference signal from a candidate resource set formed by the candidate resource; where
the candidate resource includes a candidate time domain resource, and any one of the candidate time domain resource includes at least one of the following:
   a first time unit, where the first time unit is only used for transmitting the sidelink positioning reference signal; and
   a second time unit, where the second time unit is used for transmitting the sidelink positioning reference signal and resource determining-related information.

A second aspect provides a resource determining apparatus. The apparatus includes:
a first determining module, configured to determine a candidate resource of a sidelink positioning reference signal; and
a second determining module, configured to determine a target resource for transmitting the sidelink positioning reference signal from a candidate resource set formed by the candidate resource; where
the candidate resource includes a candidate time domain resource, and any one of the candidate time domain resource includes at least one of the following:
   a first time unit, where the first time unit is only used for transmitting the sidelink positioning reference signal; and
   a second time unit, where the second time unit is used for transmitting the sidelink positioning reference signal and resource determining-related information.

A third aspect provides a terminal. The terminal includes a processor and a memory, where the memory stores a program or instruction capable of running on the processor, and when the program or instruction is executed by the processor, the method according to the first aspect is implemented.

A fourth aspect provides a terminal including a processor and a communications interface, where the processor is configured to:
determine a candidate resource of a sidelink positioning reference signal; and
determine a target resource for transmitting the sidelink positioning reference signal from a candidate resource set formed by the candidate resource; where
the candidate resource includes a candidate time domain resource, and any one of the candidate time domain resource includes at least one of the following:
   a first time unit, where the first time unit is only used for transmitting the sidelink positioning reference signal; and
   a second time unit, where the second time unit is used for transmitting the sidelink positioning reference signal and resource determining-related information.

A fifth aspect provides a resource determining system including a terminal, where the terminal is capable of executing the resource determining method according to the first aspect.

A sixth aspect provides a readable storage medium, where the readable storage medium stores a program or instruction. When the program or instruction is executed by a processor, the method according to the first aspect is implemented.

A seventh aspect provides a chip, where the chip includes a processor and a communications interface, the communications interface is coupled to the processor, and the processor is configured to run a program or instruction to implement the method according to the first aspect.

An eighth aspect provides a computer program/program product. The computer program/program product is stored in a storage medium and executed by at least one processor to implement the method according to the first aspect.

In the embodiments of this application, the candidate resource set used for the sidelink positioning reference signal includes one or more candidate resources. The candidate resource is only used for transmitting the sidelink positioning reference signal or used for transmitting the sidelink positioning reference signal and the resource determining-related information. In this way, the target resource for transmitting the sidelink positioning reference signal is determined from the candidate resource set, so as to implement resource mapping of the sidelink positioning reference signal, satisfying the resource requirements of positioning and avoiding data interference on signals.

### BRIEF DESCRIPTION OF DRAWINGS

FIG. 1 is a block diagram of a wireless communications system to which embodiments of this application are applicable;
FIG. 2 is a schematic diagram of a communications system according to the related art;
FIG. 3 is a schematic flowchart of mode 2 according to the related art;
FIG. 4 is a schematic structural diagram of a slot according to the related art;
FIG. 5 is a schematic flowchart of a resource determining method according to an embodiment of this application;
FIG. 6 is a first schematic diagram of a candidate resource mapping pattern according to an embodiment of this application;
FIG. 7 is a second schematic diagram of a candidate resource mapping pattern according to an embodiment of this application;
FIG. 8 is a third schematic diagram of a candidate resource mapping pattern according to an embodiment of this application;
FIG. 9 is a fourth schematic diagram of a candidate resource mapping pattern according to an embodiment of this application;
FIG. 10 is a fifth schematic diagram of a candidate resource mapping pattern according to an embodiment of this application;
FIG. 11 is a sixth schematic diagram of a candidate resource mapping pattern according to an embodiment of this application;
FIG. 12 is a seventh schematic diagram of a candidate resource mapping pattern according to an embodiment of this application;
FIG. 13 is an eighth schematic diagram of a candidate resource mapping pattern according to an embodiment of this application;
FIG. 14 is a ninth schematic diagram of a candidate resource mapping pattern according to an embodiment of this application;
FIG. 15 is a tenth schematic diagram of a candidate resource mapping pattern according to an embodiment of this application;
FIG. 16 is an eleventh schematic diagram of a candidate resource mapping pattern according to an embodiment of this application;
FIG. 17 is a twelfth schematic diagram of a candidate resource mapping pattern according to an embodiment of this application;
FIG. 18 is a thirteenth schematic diagram of a candidate resource mapping pattern according to an embodiment of this application;
FIG. 19 is a fourteenth schematic diagram of a candidate resource mapping pattern according to an embodiment of this application;
FIG. 20 is a fifteenth schematic diagram of a candidate resource mapping pattern according to an embodiment of this application;
FIG. 21 is a sixteenth schematic diagram of a candidate resource mapping pattern according to an embodiment of this application;
FIG. 22 is a schematic structural diagram of a resource determining apparatus according to an embodiment of this application;
FIG. 23 is a schematic structural diagram of a communications device according to an embodiment of this application; and
FIG. 24 is a schematic diagram of a hardware structure of a terminal implementing an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a multiple first objects. In addition, "and/or" in the specification and claims represents at least one of connected objects, and the character "/" generally indicates that the associated objects have an "or" relationship.

It should be noted that the technologies described in the embodiments of this application are not limited to long term evolution (Long Term Evolution, LTE)/LTE-Advanced (LTE-Advanced, LTE-A) systems, and may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and the NR term is used in most of the following descriptions, but these technologies may also be applied to other applications than an NR system application, for example, the 6th generation (6th Generation, 6G) communications system.

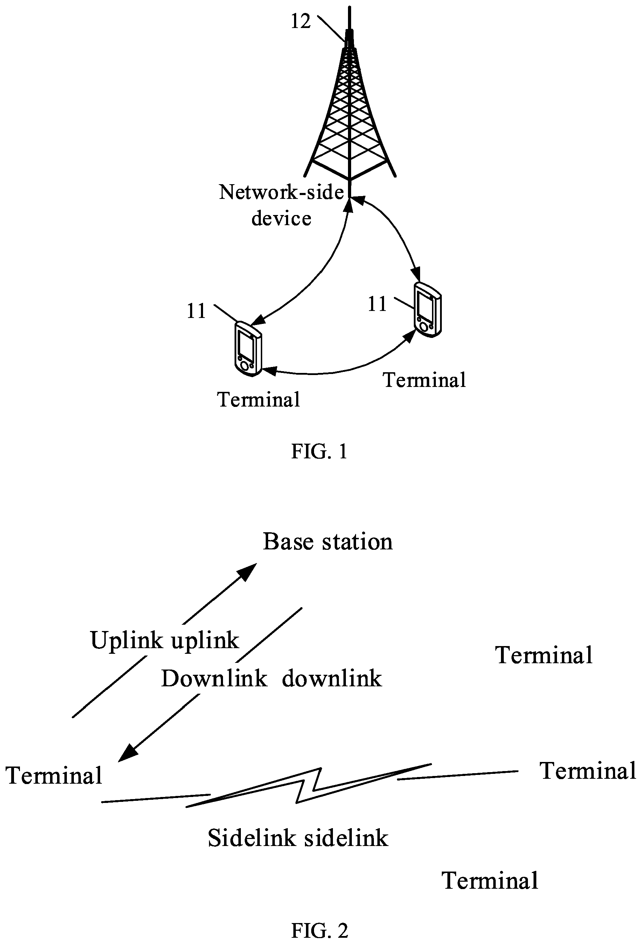

FIG. 1 is a block diagram of a wireless communications system to which embodiments of this application are applicable. The wireless communications system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bangle, a smart bracelet, a smart ring, a smart necklace, a smart ankle bangle, a smart anklet, or the like), a smart wristband, smart clothing, or the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission and Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), a location management function (location manage function, LMF), an enhanced serving mobile location centre (Enhanced Serving Mobile Location Centre, E-SMLC), a network data analytics function (network data analytics function, NWDAF), and the like.

It should be noted that in the embodiments of this application, the core network device in an NR system is used only as an example, and the specific type of the core network device is not limited herein.

The following content is described first.

FIG. 2 is a schematic diagram of a communications system according to the related art. As shown in FIG. 2, a long term evolution (Long Term Evolution, LTE) system supports sidelink (sidelink) for direct data transmission between user equipment (User Equipment, UE) (also referred to as terminals) not through a network device. That is, data is transmitted between user equipment directly at the physical layer. LTE sidelink communication is implemented based on broadcast. This is applicable to basic security communication of vehicle to everything (vehicle to everything, V2X) but not to other advanced V2X services. A 5G NR (New Radio) system supports more advanced sidelink transmission designs, such as unicast, multicast, or groupcast, so as to support more comprehensive service types.

NR V2X defines two resource allocation modes: mode 1, in which resources are scheduled by a base station; and mode 2, in which a UE determines resources for transmission. In this case, resource information may be from a broadcast message of a base station or preconfigured information. If a UE operates within the coverage of a base station and has an RRC connection with the base station, mode 1 and/or mode 2 may be used. If UE operates within the coverage of a base station but has no RRC connection with the base station, the UE can operate only in mode 2. If a UE is outside the coverage of a base station, the UE can operate only in mode 2 and perform V2X transmission based on preconfigured information.

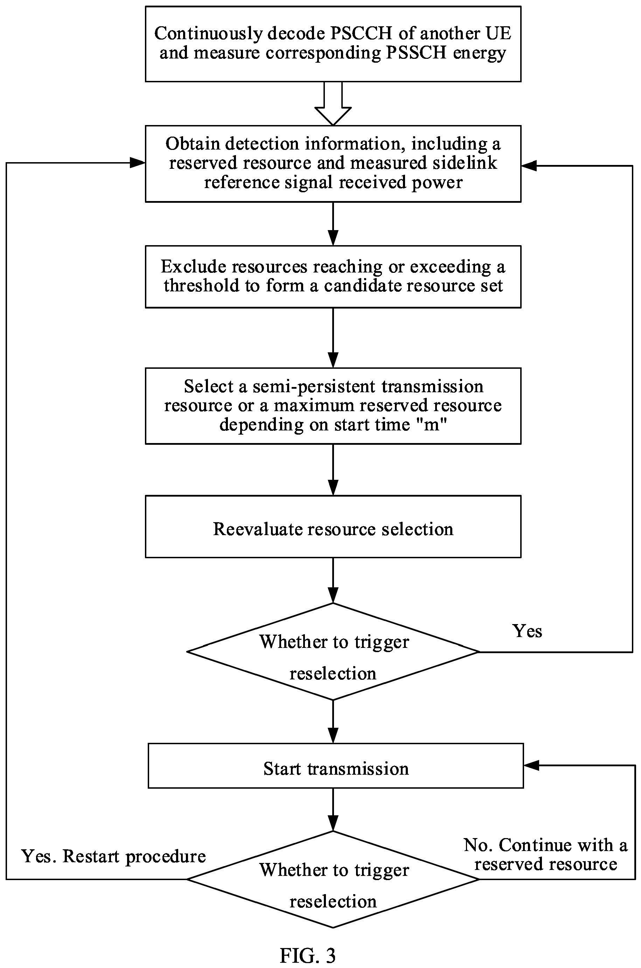

FIG. 3 is a schematic flowchart of mode 2 according to the related art. As shown in FIG. 3, the specific operation procedure of mode 2 is as follows.
(1) After resource selection is triggered, transport user equipment (Transport User Equipment, TX UE) determines a resource selection window, where a lower limit of the resource selection window is time T1 following the trigger of resource selection and an upper limit of resource selection is time T2 following the trigger. T2 is a value selected in the packet delay budget (packet delay budget, PDB) for TB transmission in the mode implemented by the UE, and T2 is not earlier than T1.
(2) Before resource selection, the UE needs to determine a candidate resource set (candidate resource set, CRS) for resource selection, and compare reference signal received power (Reference Signal Received Power, RSRP) of the resource measured in the resource selection window with a corresponding RSRP threshold (threshold). If the RSRP is lower than the RSRP threshold, the resource can be added to the candidate resource set.
(3) After a resource set is determined, the UE randomly selects a transmission resource in the candidate resource set. In addition, the UE can reserve transmission resources of this transmission for next transmissions.

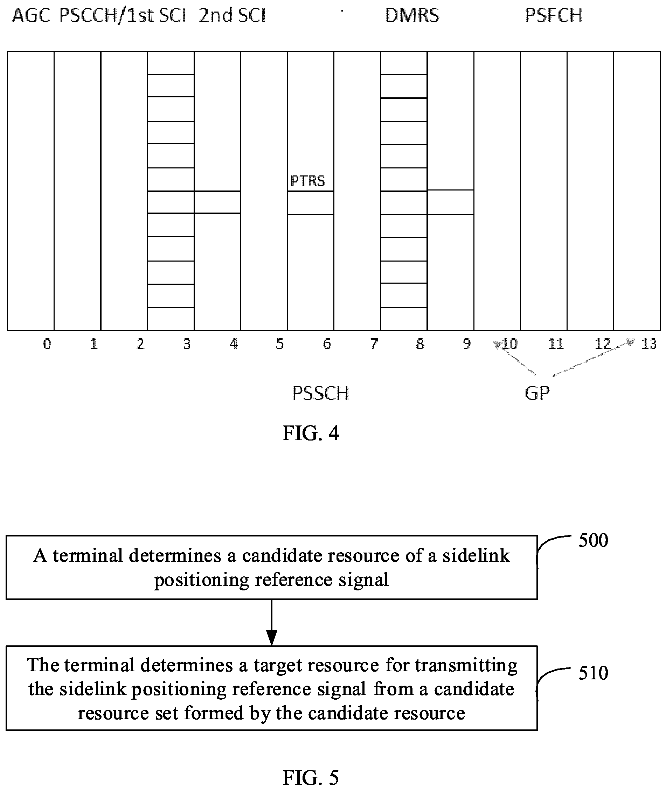

FIG. 4 is a schematic structural diagram of a slot according to the related art. As shown in FIG. 4, the period of a PSFCH may be indicated by a resource pool (resource pool), and P={0, 1, 2, 4} slot, and some slots may not have a physical sidelink feedback channel (Physical SideLink Feedback Channel, PSFCH). Among them, the first symbol may be used for automatic gain control (Automatic Gain Control, AGC), and the last symbol must be used as a gap (Gap). The physical sidelink control channel (Physical SideLink Control Channel, PSCCH) may occupy 2 to 3 symbols, for example, the first 2 or 3 symbols of 2 to 4 symbols, and PSSCH optionally occupies 6 to 13 symbols. The pattern (pattern) and symbols of PSSCH demodulation reference signals (Demodulation Reference Signal, DMRS) are shown Table 1 (PSSCH DM-RS time domain positioning table) below.

**Table 1 PSSCH DM-RS time domain positioning table**

| 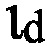 in symbols | DM-RS position 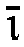 | | | | | |
|---|---|---|---|---|---|---|
| | PSCCH duration 2 symbols | | | PSCCH duration 3 symbols | | |
| | Number of PSSCH DM-RS | | | Number of PSSCH DM-RS | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

The following describes in detail the resource determining method and apparatus, terminal, and storage medium provided in the embodiments of this application by using some embodiments and application scenarios thereof with reference to the accompanying drawings.

In an embodiment of this application, the positioning signal or SL-PRS may be as follows.

Optionally, the SL-PRS signal may be an SL signal for positioning.

Optionally, the SL-PRS signal may be a multiplexed NR positioning signal or an existing SL signal or an enhancement, for example, a channel state information reference signal (CSI Reference Signal, CSI-RS), a sidelink synchronization signal block (sidelink Synchronization Signal block, S-SSB), a tracking reference signal (tracking reference signal, TRS), or a demodulation reference signal (Demodulation Reference Signal, DMRS).

Optionally, the SL-PRS signal may be a dedicate NR positioning signal defined for positioning and extended to the sidelink, and the signal includes but is not limited to a gold code sequence, an m sequence, and a ZC sequence.

Optionally, the SL-PRS signal may be a dedicate sidelink positioning signal defined for positioning.

FIG. 5 is a schematic flowchart of a resource determining method according to an embodiment of this application. As shown in FIG. 5, the method includes the following steps.

Step 500. A terminal determines a candidate resource of a sidelink positioning reference signal.

Optionally, the terminal may first determine a candidate resource set or a candidate resource pool to which the sidelink positioning reference signal can be mapped.

Optionally, the candidate resource set formed by the candidate resource may be pre-indicated by a network, preconfigured, or predefined by a protocol.

For example, in an embodiment, SL-PRS uses a dedicated candidate resource pool (for example, a first resource pool).

For example, in an embodiment, the candidate resource pool for SL-PRS transmission cannot be used for PSSCH transmission.

For example, in an embodiment, the candidate resource pool for SL-PRS transmission cannot be used for PSSCH transmission in communications systems of some versions. This avoids interference with resources in communications systems of some versions.

Further, the structure of a candidate time domain resource in a dedicated resource pool is different from the structure of a time domain resource used for data scheduling.

Further, the structure of the slot is visible in the first time unit or the second time unit.

Optionally, the terminal may first determine a candidate resource to which the sidelink positioning reference signal can be mapped.

For example, in an embodiment, SL-PRS uses a dedicated reserved candidate resource.

For example, in an embodiment, the candidate resource pool for SL-PRS transmission cannot be used for PSSCH transmission or optionally cannot be seen in communications systems of some versions. This avoids interference with resources in communications systems of some versions.

Further, the structure of a candidate time domain resource in a dedicated reserved resource is different from the structure of a time domain resource used for data scheduling.

Further, the structure of the slot is visible in the first time unit or the second time unit.

Optionally, the candidate resource to which the sidelink positioning reference signal (Sidelink- Positioning Reference Signal, SL-PRS) can be mapped may include a candidate time domain resource, for example, a first time unit. The first time unit is only used for transmitting the sidelink positioning reference signal.

Optionally, the candidate resource to which the sidelink positioning reference signal can be mapped may only be used for transmitting the sidelink positioning reference signal.

Optionally, the candidate resource to which the sidelink positioning reference signal can be mapped may include a candidate time domain resource, for example, a second time unit. The second time unit is used for transmitting the sidelink positioning reference signal and resource determining-related information.

Optionally, the candidate resource to which the sidelink positioning reference signal can be mapped may be used for transmitting the sidelink positioning reference signal and the resource determining-related information.

Optionally, the resource determining method may be performed by a terminal or a transmit terminal of the sidelink positioning reference signal.

Optionally, the resource determining method may be performed by a terminal or a receive terminal of the sidelink positioning reference signal.

In an embodiment, the terminal receives configuration information of a candidate resource pool or preconfigured resources, for example, time domain (at least one of time domain bitmap, periodicity, number of symbols, or start symbol) or frequency domain configuration information (for example, at least one of bandwidth, starting frequency domain position, comb value, SL-PRS pattern, and the like), and uses the configuration information for determining the candidate resource.

Step 510. The terminal determines a target resource for transmitting the sidelink positioning reference signal from a candidate resource set formed by the candidate resource.

Optionally, the terminal may determine the target resource for transmitting the sidelink positioning reference signal from the candidate resource set, and then may map the sidelink positioning reference signal based on the target resource.

Optionally, the terminal may determine the target resource for transmitting the sidelink positioning reference signal from the candidate resource set. It can be understood as that the terminal selects one of a multiple candidate resources included in the candidate resource set as the target resource.

Optionally, any one of the candidate resources may include at least one of the following:
a first time unit, where the first time unit is only used for transmitting the sidelink positioning reference signal; and
a second time unit, where the second time unit is used for transmitting the sidelink positioning reference signal and resource determining-related information.

That is, the determined target resource may include at least one of the following:
a first time unit, where the first time unit is only used for transmitting the sidelink positioning reference signal; and
a second time unit, where the second time unit is used for transmitting the sidelink positioning reference signal and resource determining-related information.

In an optional embodiment, it may be indicated that the candidate resource is a candidate resource only used for transmitting the sidelink positioning reference signal or used for transmitting the sidelink positioning reference signal and the resource determining-related information.

In the embodiments of this application, the candidate resource set used for the sidelink positioning reference signal includes one or more candidate resources. The candidate resource is only used for transmitting the sidelink positioning reference signal or used for transmitting the sidelink positioning reference signal and the resource determining-related information. In this way, the target resource for transmitting the sidelink positioning reference signal is determined from the candidate resource set, so as to implement resource mapping of the sidelink positioning reference signal, satisfying the resource requirements of positioning and avoiding data interference on signals.

Optionally, the resource determining-related information includes at least one of the following:
sidelink control information, where the sidelink control information is used for scheduling the sidelink positioning reference signal; or
a sensing signal for sensing a scheduling situation of the candidate resource.

Optionally, the candidate resource to which the sidelink positioning reference signal can be mapped can be used for transmitting the sidelink positioning reference signal and scheduling the sidelink control information for the sidelink positioning reference signal.

Optionally, the candidate resource to which the sidelink positioning reference signal can be mapped can be used for transmitting the sidelink positioning reference signal and detecting a sensing signal for sensing a scheduling situation of the candidate resource.

Optionally, the candidate resource to which the sidelink positioning reference signal can be mapped can be used for transmitting the sidelink positioning reference signal, scheduling the sidelink control information for the sidelink positioning reference signal, and detecting a sensing signal for sensing a scheduling situation of the candidate resource.

In an embodiment, the resource determining-related information includes SCI, and is used for scheduling or indicating the transmission of the sidelink positioning reference signal.

Optionally, in an embodiment, the terminal determines the target resource for transmitting the positioning reference signal based on the configuration information of a candidate resource pool or preconfigured resources, as well as the SCI information.

In an embodiment, the resource determining-related information includes a DMRS, which is used for selecting a resource and determining whether the candidate resource can be used for transmitting the sidelink positioning reference signal. For example, if the RSRP of the DMRS is higher than a specified threshold, the associated candidate resource cannot be used for transmitting the sidelink positioning reference signal.

Optionally, in an embodiment, the terminal determines the target resource for transmitting the positioning reference signal based on the SCI intercepted in the resource selection window and the RSRP of the DMRS.

Optionally, in an embodiment, the terminal determines the target resource for transmitting the positioning reference signal based on the SCI intercepted in the resource selection window and the RSRP of the SL-PRS.

Optionally, the sensing signal for sensing the scheduling situation of the candidate resource may include a sidelink shared channel (Physical Sidelink Shared Channel, PSSCH) demodulation reference signal (Demodulation reference signal, DMRS).

Optionally, the sidelink control information (Sidelink Control Information, SCI) only includes 1st SCI.

Optionally, in a case that the candidate resource to which the sidelink positioning reference signal can be mapped is a slot, the slot may satisfy at least one of the following:
the slot is only used for transmitting SL-PRS;
the Slot is only used for transmitting 1st SCI and SL-PRS; and
the slot is used for transmitting 1st SCI, SL-PRS, and PSSCH DMRS.

Optionally, in a case that the candidate resource to which the sidelink positioning reference signal can be mapped is a dedicated resource pool, the structure of a slot in the dedicated resource pool may satisfy at least one of the following:
the slot is only used for transmitting SL-PRS;
the slot is only used for transmitting 1st SCI and SL-PRS; and
the slot is used for transmitting 1st SCI, SL-PRS, and PSSCH DMRS.

Optionally, in a case that the candidate resource to which the sidelink positioning reference signal can be mapped is a dedicated resource pool, the structure of a mini-slot in the dedicated resource pool may satisfy at least one of the following:
the mini-slot is only used for transmitting SL-PRS;
the mini-slot is only used for transmitting 1st SCI and SL-PRS; and
the mini-slot is used for transmitting 1st SCI, SL-PRS, and PSSCH DMRS.

The mini-slot is merely a name used to describe a time scheduling unit smaller than a slot.

Optionally, the 1st SCI may refer to first stage SCI.

Optionally, in a case that the candidate resource to which the sidelink positioning reference signal can be mapped is a dedicated resource pool, a time domain candidate resource in the dedicated resource pool may be one or more first time units, and the first time unit is only used for transmitting the sidelink positioning reference signal.

Optionally, the candidate resource to which the sidelink positioning reference signal can be mapped may only be used for transmitting the sidelink positioning reference signal.

Optionally, in a case that the candidate resource to which the sidelink positioning reference signal can be mapped is a dedicated resource pool, a time domain candidate resource in the dedicated resource pool may be one or more second time units, and the second time unit is used for transmitting the sidelink positioning reference signal and resource determining-related information.

Optionally, the candidate resource to which the sidelink positioning reference signal can be mapped may be used for transmitting the sidelink positioning reference signal and the resource determining-related information.

Optionally, the first time unit includes one or more time subunits, and any one of the time subunits is the smallest unit for resource scheduling of the sidelink positioning reference signal.

Optionally, the smallest unit for resource scheduling of the sidelink positioning reference signal may be referred to as a time subunit or an SL-PRS resource.

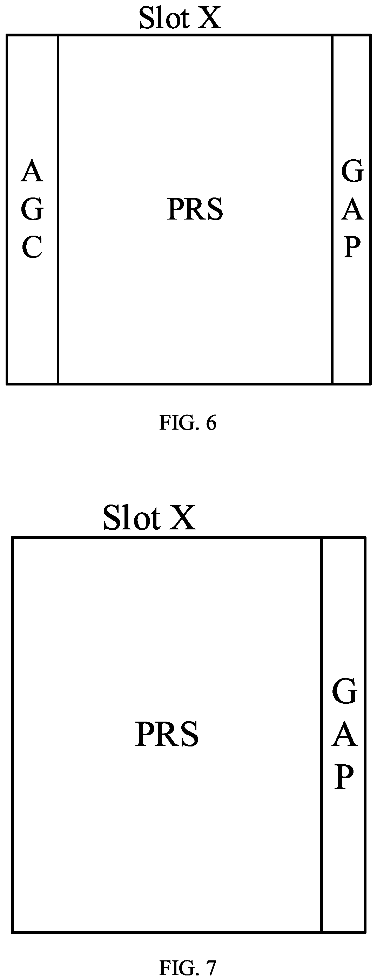

FIG. 6 is a first schematic diagram of a candidate resource mapping pattern according to an embodiment of this application, and FIG. 7 is a second schematic diagram of a candidate resource mapping pattern according to an embodiment of this application. As shown in FIG. 6 and FIG. 7, the first time unit used only for transmitting the sidelink positioning reference signal may include one SL-PRS resource.

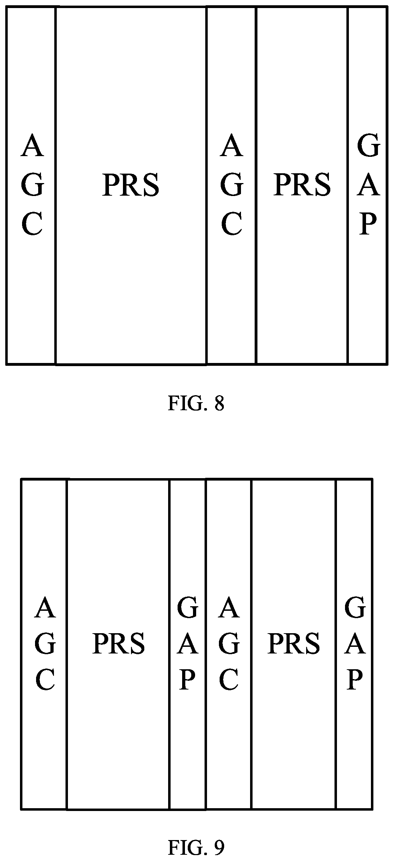

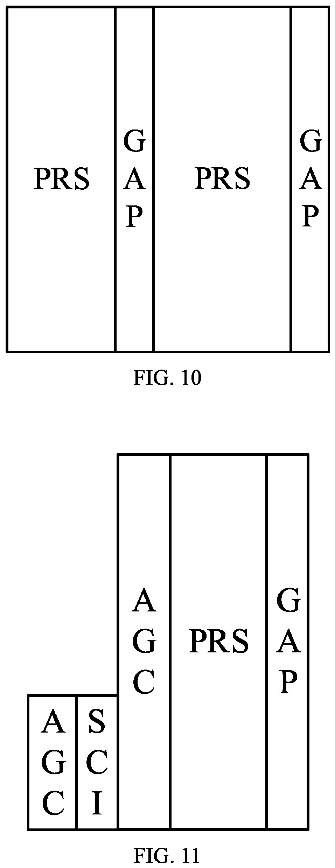

FIG. 8 is a third schematic diagram of a candidate resource mapping pattern according to an embodiment of this application, FIG. 9 is a fourth schematic diagram of a candidate resource mapping pattern according to an embodiment of this application, and FIG. 10 is a fifth schematic diagram of a candidate resource mapping pattern according to an embodiment of this application. As shown in FIG. 8, FIG. 9, and FIG. 10, the first time unit used only for transmitting the sidelink positioning reference signal may include a multiple SL-PRS resources. In the foregoing figures, one or two SL-PRS resources are used as an example, but this does not limit the embodiments of this application, and three, four, five, six, or even more SL-PRS resources may be included.

Optionally, FIG. 6 to FIG. 10 do not show a symbol for DMRS transmission, but it does not mean that no symbol is used for DMRS transmission. In an optional embodiment, the first time unit or the second time unit described in the embodiments may include or may not include a symbol for DMRS transmission, for example, the second symbol position.

Optionally, the second time unit includes a resource determining-related information part and one or more time subunits, and any one of the time subunits is the smallest unit for resource scheduling of the sidelink positioning reference signal; where the resource determining-related information part includes sidelink control information mapping.

Optionally, the smallest unit for resource scheduling of the sidelink positioning reference signal may be referred to as a time subunit or an SL-PRS resource.

Optionally, the second time unit is used for transmitting the sidelink positioning reference signal and the resource determining-related information. To be specific, the second time unit includes a resource determining-related information part for transmitting the resource determining-related information (for example, sidelink control information) and one or more time subunits for transmitting one or more sidelink positioning reference signals.

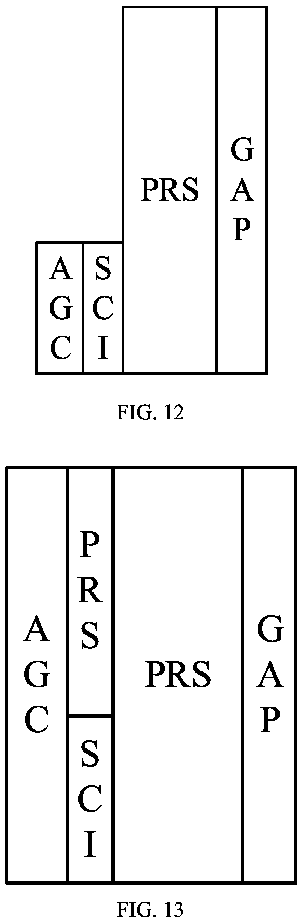

FIG. 11 is a sixth schematic diagram of a candidate resource mapping pattern according to an embodiment of this application, FIG. 12 is a seventh schematic diagram of a candidate resource mapping pattern according to an embodiment of this application, and FIG. 13 is an eighth schematic diagram of a candidate resource mapping pattern according to an embodiment of this application. As shown in FIG. 11, FIG. 12, and FIG. 13, the second time unit may include a resource determining-related information part and one time subunit.

It should be noted that only one SCI is shown in some of the foregoing figures, but optionally, multiple SCIs may be mapped to SCI symbols through FDM.

It should be noted that the foregoing figures are merely examples. Although a DMRS is not added, it does not mean that the DMRS is not included in the first time unit or the second time unit according to embodiments of this application. DMRS may be mapped to symbols of SCI (for example, PSCCH DMRS) or mapped according to a specified DMRS pattern.

Optionally, FIG. 11 to FIG. 13 do not show a symbol for DMRS transmission, but it does not mean that no symbol is used for DMRS transmission. In an optional embodiment, the first time unit or the second time unit described in the embodiments may include or may not include a symbol for DMRS transmission, for example, the second symbol position.

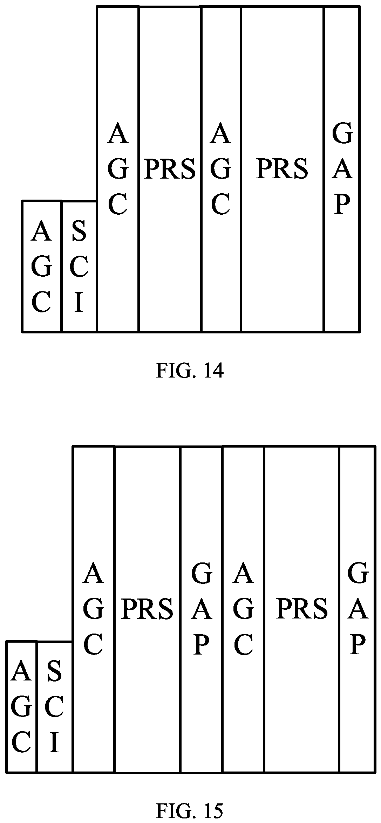

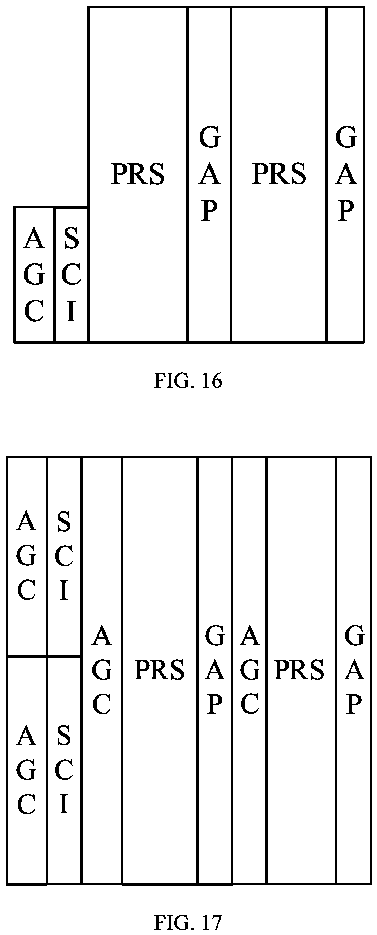

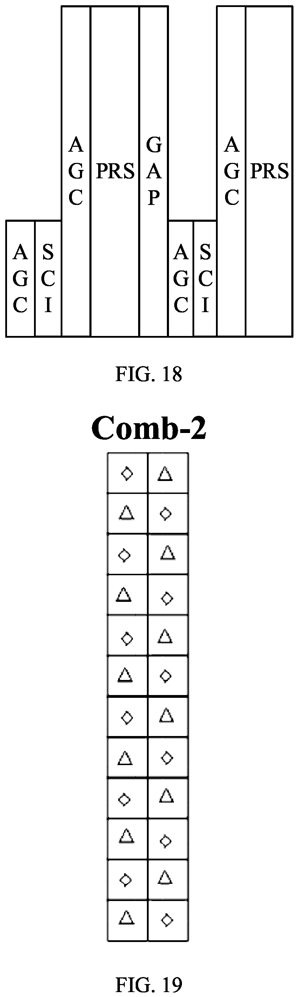

FIG. 14 is a ninth schematic diagram of a candidate resource mapping pattern according to an embodiment of this application, FIG. 15 is a tenth schematic diagram of a candidate resource mapping pattern according to an embodiment of this application, FIG. 16 is an eleventh schematic diagram of a candidate resource mapping pattern according to an embodiment of this application, FIG. 17 is a twelfth schematic diagram of a candidate resource mapping pattern according to an embodiment of this application, and FIG. 18 is a thirteenth schematic diagram of a candidate resource mapping pattern according to an embodiment of this application. As shown in FIG. 14, FIG. 15, FIG. 16, FIG. 17, and FIG. 18, the second time unit may include a resource determining-related information part and a multiple time subunits.

Optionally, FIG. 14 to FIG. 18 do not show a symbol for DMRS transmission, but it does not mean that no symbol is used for DMRS transmission. In an optional embodiment, the first time unit or the second time unit described in the embodiments may include or may not include a symbol for DMRS transmission, for example, the second symbol position.

For example, one time unit is one slot. One slot may include three, four, five, or six time domain resource patterns.

Optionally, one second time unit may be one slot.

Optionally, one first time unit may be one slot.

Optionally, the smallest unit for resource scheduling of the sidelink positioning reference signal may be less than one slot. For example, one time unit has L time subunits. In this case, the smallest unit for resource scheduling of the sidelink positioning reference signal may be slot/L or may be referred to as a mini-slot.

Optionally, an SL-PRS can be transmitted on consecutive symbols in a slot or mini-slot.

Optionally, the time subunit and the resource determining-related information part do not overlap in time domain.

Taking FIG. 11, FIG. 12, and FIG. 14 to FIG. 18 as an example, the time subunit and the resource determining-related information part may not overlap in time domain.

Optionally, a part of the time subunit and the resource determining-related information part overlap in time domain.

Taking FIG. 13 as an example, the time subunit and the resource determining-related information part may overlap in time domain.

Optionally, the overlap manner shown in FIG. 13 is only an example of the time-domain overlap between the time subunit and the resource determining-related information part, and does not limit the embodiments of this application. Any time-domain overlap manner is applicable to the embodiments of this application. Optionally, the second time unit includes one or more time subunits, and any one of the time subunits is used for transmitting the sidelink positioning reference signal and the resource determining-related information.

Taking FIG. 18 as an example, the second time unit includes one or more time subunits, where each time subunit is used for transmitting the sidelink positioning reference signal and the resource determining-related information. That is, each time subunit includes a resource determining-related information part (for example, the SCI in FIG. 18) and a part for transmitting the sidelink positioning reference signal for example, the PRS in FIG. 18).

Optionally, bandwidth corresponding to the time subunit is greater than bandwidth corresponding to the resource determining-related information part.

Taking FIG. 6 to FIG. 18 as an example, the bandwidth corresponding to the time subunit may be larger than the bandwidth corresponding to the resource determining-related information part.

Optionally, one of the time subunits includes a first part, a second part, and a third part, where
the first part is used for automatic gain control, the second part is used for transmitting a sidelink positioning reference signal, and the third part includes a gap Gap.

It should be noted that the automatic gain control (AGC part) in various embodiments of this application may be a duplicate of one of the SL-PRS symbols, or a duplicate of the symbol adjacent to the first part, or a symbol used for transmitting an SL-PRS.

Optionally, the gap Gap in various embodiments of this application may be used for the UE to switch between transmission and reception.

Taking FIG. 6, FIG. 9, FIG. 11, FIG. 15, and FIG. 17 as an example, one time subunit may include the first part for automatic gain control (for example, the AGC part in the foregoing figures), the second part for transmitting a sidelink positioning reference signal (for example, the PRS part in the foregoing figures), and the third part used as a gap Gap (for example, the GAP part in the foregoing figures).

Optionally, the structure of the time subunit shown in the foregoing figures is only an example of the structure of the time subunit, and it does not limit the embodiments of this application. Any structure that can implement an embodiment of this application is applicable to the embodiments of this application.

Optionally, the structure of the first time unit shown in the foregoing figures is only an example of the structure of the first time unit, and it does not limit the embodiments of this application. Any structure that can implement an embodiment of this application is applicable to the embodiments of this application.

Optionally, the structure of the second time unit shown in the foregoing figures is only an example of the structure of the second time unit, and it does not limit the embodiments of this application. Any structure that can implement an embodiment of this application is applicable to the embodiments of this application.

Optionally, the first part is the first symbol in the time subunit, the third part is the last symbol in the time subunit, and the second part is a consecutive symbol part from the second symbol to the penultimate symbol in the time subunit.

Taking FIG. 6, FIG. 9, FIG. 11, FIG. 15, or FIG. 17 as an example, the AGC part may be the first symbol in the time subunit, the GAP part may be the last symbol in the time subunit, and the PRS part may be a consecutive symbol part from the second symbol to the penultimate symbol in the time subunit.

Taking FIG. 6 as an example, symbols that can be used for SL-PRS transmission are symbols 1-13, the first symbol (symbol 0) is AGC, and the last symbol (symbol 14) is Gap.

Taking FIG. 6 as an example, symbols that can be used for SL-PRS transmission may be symbols X-Y, the X-th symbol is AGC, and the last symbol Y is Gap, where X is the start symbol of SL-PRS and Y is the end symbol of SL-PRS.

Optionally, AGC (or duplicated OFDM symbol) may be the second symbol (symbol 1, or the first symbol of PSSCH) or a duplicate of one symbol in the PRS part.

Optionally, one of the time subunits includes a fourth part and a fifth part, where the fourth part is used for transmitting a sidelink positioning reference signal and the fifth part includes a gap Gap.

Taking FIG. 7, FIG. 10, FIG. 12, or FIG. 16 as an example, the time subunit may include the fourth part (PRS part) for transmitting the sidelink positioning reference signal and the fifth part (GAP part) used as a gap Gap.

Optionally, the fifth part is the last symbol in the time subunit, and the fourth part is a consecutive symbol part from the first symbol to the penultimate symbol in the time subunit.

Taking FIG. 7, FIG. 10, FIG. 12, or FIG. 16 as an example, the GAP part may be the last symbol in the time subunit, and the PRS part may be a consecutive symbol part from the first symbol to the penultimate symbol in the time subunit.

Optionally, the figures do not show the symbols for DMRS transmission, but it does not mean that no symbol is used for DMRS transmission. In an optional embodiment, the consecutive symbol part in various embodiments may be consecutive symbols excluding the symbol for DMRS.

Taking FIG. 7 as an example, symbols that can be used for SL-PRS transmission may be symbols 0-13, and the last symbol is Gap.

Taking FIG. 7 as an example, symbols that can be used for SL-PRS transmission may be symbols X-Y, and the last symbol Y is Gap, where X is the start symbol of SL-PRS and Y is the end symbol of SL-PRS.

Optionally, the number of symbols occupied by any SL-PRS resources within a symbol is greater than or equal to 2, so that AGC can be performed. In the embodiment, optionally, the first time subunit includes two or more symbols.

Optionally, in a case that the time subunit is not the last part of a time unit containing the time subunit, the time subunit includes a sixth part and a seventh part, where the sixth part is used for automatic gain control and the seventh part is used for transmitting a sidelink positioning reference signal after being scheduled.

Taking FIG. 8 or FIG. 14 as an example, in a case that the first time unit or the second time unit includes a multiple time subunits, the time subunits not in the last part may include the sixth part (AGC part) for automatic gain control and the seventh part (PRS part) for transmitting the sidelink positioning reference signal after being scheduled.

Optionally, the sixth part is the first symbol in the time subunit, and the seventh part is a consecutive symbol part from the second symbol to the last symbol in the time subunit.

Optionally, the first time unit includes a multiple time subunits, and the multiple time subunits may be in different structures. To be specific, some time subunits do not include the Gap part.

Optionally, the figures do not show the symbols for DMRS transmission, but it does not mean that no symbol is used for DMRS transmission. In an optional embodiment, the consecutive symbol part in various embodiments may be consecutive symbols excluding the symbol for DMRS.

Taking FIG. 8 or FIG. 14 as an example, the AGC part may be the first symbol in the time subunit, and the PRS part may be a consecutive symbol part from the second symbol to the last symbol in the time subunit.

Optionally, in a case that the time subunit is the last part of a time unit containing the time subunit, the time subunit includes an eighth part, a ninth part, and a tenth part, where the eighth part is used for automatic gain control, the ninth part is used for transmitting a sidelink positioning reference signal after being scheduled, and the tenth part includes a gap Gap.

Optionally, the first time unit includes a multiple time subunits, and the multiple time subunits may be in different structures, but the last time subunit needs to include the Gap part. In other words, the first time unit includes at least one Gap part.

Taking FIG. 8, FIG. 9, FIG. 11, FIG. 14, FIG. 15, or FIG. 17 as an example, in a case that the first time unit or the second time unit includes a multiple time subunits, the time subunits in the last part may include the eighth part (AGC part) for automatic gain control, the ninth part (PRS part) for transmitting the sidelink positioning reference signal after being scheduled, and the tenth part (Gap part) used as a gap Gap.

Optionally, the time subunit includes an eleventh part, and the eleventh part is used for transmitting a sidelink positioning reference signal after being scheduled.

Optionally, the time subunit may include an eleventh part for transmitting the sidelink positioning reference signal after being scheduled.

Optionally, in a case that the time subunit is not the last part of a time unit containing the time subunit, the time subunit includes an eleventh part, and the eleventh part is used for transmitting a sidelink positioning reference signal after being scheduled.

Optionally, in a case that the first time unit or the second time unit includes a multiple time subunits, the time subunits not in the last part may include the eleventh part (PRS part) for transmitting the sidelink positioning reference signal after being scheduled.

Optionally, in an embodiment, in a case that the first time unit includes a multiple time subunits, each of the time subunits only includes the eleventh part (PRS part) for transmitting the sidelink positioning reference signal or the eleventh part (PRS part) for transmitting resource scheduling information and the sidelink positioning reference signal.

Optionally, the first time unit specifies the part that is determined to be used for AGC or Gap. In other words, the time subunit does not include the AGC or Gap part. However, during determination of a structure for the first time unit, it is determined, based on the position of the first time subunit, that the previous symbol of the first time subunit is the part used for AGC and the next symbol of the first time subunit is the part used for Gap. In other words, the first time subunit including the AGC part as described in the foregoing embodiment can be understood as being associated with one AGC part. In other words, the first time subunit including the Gap part as described in the foregoing embodiment can be understood as being associated with one Gap part.

Optionally, the first time subunit includes the AGC part or is associated with the AGC part. This can be understood as that the time-domain position of the first time subunit is adjacent to the time-domain position of the AGC part, or understood as that the symbol for AGC may be a duplicate of a symbol in the first time subunit.

Optionally, the first time subunit includes the Gap part or is associated with the Gap part. This can be understood as that the time-domain position of the first time subunit is adjacent to the time-domain position of the Gap part, and Gap can be used as a gap between the first time subunit and previous and next time resources.

Optionally, one or more time subunits belonging to one time unit includes only one gap Gap.

Taking FIG. 8, FIG. 14, or FIG. 18 as an example, in a case that one time unit includes a multiple time subunits, the time unit may include only one gap Gap.

Taking FIG. 6, FIG. 7, FIG. 11, FIG. 12, FIG. 13, or FIG. 18 as an example, in a case that one time unit includes one time subunit, the time unit may include only one gap Gap.

Optionally, one or more time subunits belonging to one time unit only includes a part for automatic gain control.

Taking FIG. 6 as an example, in a case that one time unit includes one time subunit, the time unit may only include a part for automatic gain control (AGC).

Optionally, in a case that one time unit includes a multiple time subunits, the time unit may only include a part for automatic gain control (AGC).

Optionally, P time subunits belonging to one time unit include a total of P gaps Gaps, where P is a positive integer greater than or equal to 1.

Optionally, in a case that one time unit includes P time subunits, the time unit may include P gaps Gaps.

Taking FIG. 6, FIG. 7, FIG. 11, or FIG. 12 as an example, in a case that one time unit includes one time subunit, the time unit may include one gap Gap.

Taking FIG. 9, FIG. 10, FIG. 15, FIG. 16, or FIG. 17 as an example, in a case that one time unit includes two time subunits, the time unit may include two gaps Gaps.

Optionally, Q time subunits belonging to one time unit include a total of Q parts for automatic gain control, where Q is a positive integer greater than or equal to 1.

Optionally, in a case that one time unit includes Q time subunits, the time unit may include Q parts for automatic gain control (AGC part).

Taking FIG. 6 as an example, in a case that one time unit includes one time subunit, the time unit may include one part for automatic gain control (AGC part).

Taking FIG. 8 or FIG. 9 as an example, in a case that one time unit includes two time subunits, the time unit may include two parts for automatic gain control (AGC part).

Optionally, multiple time subunits belonging to one time unit are used for at least one of the following:
transmitting sidelink positioning reference signals from different terminals;
transmitting multiple sidelink positioning reference signals from one terminal; and
transmitting the multiple sidelink positioning reference signals.

Optionally, in a case that the first time unit or the second time unit includes multiple time subunits, different time subunits can be used for transmitting sidelink positioning reference signals from different terminals.

It should be noted that the first time subunit including the AGC part as described in the foregoing embodiment can be understood as being associated with one AGC part. In other words, the first time subunit including the Gap part as described in the foregoing embodiment can be understood as being associated with one Gap part.

Optionally, the first time subunit includes the AGC part or is associated with the AGC part. This can be understood as that the time-domain position of the first time subunit is adjacent to the time-domain position of the AGC part, or understood as that the symbol for AGC may be a duplicate of a symbol in the first time subunit.

Optionally, the first time subunit includes the Gap part or is associated with the Gap part. This can be understood as that the time-domain position of the first time subunit is adjacent to the time-domain position of the Gap part, and Gap can be used as a gap between the first time subunit and previous and next time resources.

Taking FIG. 8, FIG. 9, FIG. 10, FIG. 14, FIG. 15, FIG. 16, FIG. 17, or FIG. 18 as an example, the first PRS part can be used for transmitting a sidelink positioning reference signal from UE1, and the second PRS part can be used for transmitting a sidelink positioning reference signal from UE2.

Optionally, in a case that the first time unit or the second time unit includes multiple time subunits, different time subunits can be used for transmitting multiple sidelink positioning reference signals from one terminal.

Taking FIG. 8, FIG. 9, FIG. 10, FIG. 14, FIG. 15, FIG. 16, FIG. 17, or FIG. 18 as an example, the first PRS part can be used for transmitting a sidelink positioning reference signal PRS1 of UE1, and the second PRS part can be used for transmitting a sidelink positioning reference signal PRS2 of UE1.

Taking FIG. 8, FIG. 9, FIG. 10, FIG. 14, FIG. 15, FIG. 16, FIG. 17, or FIG. 18 as an example, the first PRS part can be used for transmitting a sidelink positioning reference signal PRS3, and the second PRS part can be used for transmitting a sidelink positioning reference signal PRS4.

The receive terminals of PRS 1 to PRS4 may be the same or different.

Optionally, the resource determining-related information part includes a multiple resource determining-related information subparts, and different resource determining-related information subparts correspond to different time subunits.

Optionally, taking FIG. 17 or FIG. 18 as an example, the resource determining-related information part included in the second time unit may include a multiple resource determining-related information subparts (for example, a multiple SCI parts).

Optionally, different resource determining-related information subparts correspond to different time subunits.

Optionally, different resource determining-related information subparts may be used to schedule PRS parts in different time subunits.

Optionally, different resource determining-related information subparts may be used to be associated with different terminals.

Optionally, different resource determining-related information subparts may be associated with one transmit terminal or receive terminal.

Optionally, the resource determining-related information subpart includes at least one of the following:
sidelink control information, where the sidelink control information is used for scheduling a sidelink positioning reference signal corresponding to the time subunit; or
a sensing signal for sensing a scheduling situation of the time subunit.

Optionally, any one of the resource determining-related information subparts may include sidelink control information (for example, the SCI part) for scheduling the sidelink positioning reference signal corresponding to the time subunit.

Optionally, any one of the resource determining-related information subparts may include a sensing signal (for example, PSSCH DMRS) for sensing the scheduling situation of the time subunit.

Optionally, any one of the resource determining-related information subparts may include sidelink control information (for example, the SCI part) for scheduling the sidelink positioning reference signal corresponding to the time subunit and a sensing signal (for example, PSSCH DMRS) for sensing the scheduling situation of the time subunit.

Optionally, the multiple resource determining-related information subparts are used for at least one of the following:
being scheduled by one terminal for transmitting multiple sidelink positioning reference signals; and
being scheduled by multiple terminals for transmitting a sidelink positioning reference signal.

Optionally, multiple resource determining-related information subparts in the resource determining-related information part may be scheduled by one terminal for transmitting multiple sidelink positioning reference signals.

Taking FIG. 17 or FIG. 18 as an example, two SCI parts may be scheduled by one terminal for transmitting multiple sidelink positioning reference signals.

Optionally, multiple resource determining-related information subparts in the resource determining-related information part may be scheduled by multiple terminals for transmitting sidelink positioning reference signals.

Taking FIG. 17 or FIG. 18 as an example, two SCI parts may be scheduled by multiple terminals for transmitting sidelink positioning reference signals from these terminals.

Optionally, the multiple resource determining-related information subparts do not overlap in time domain.

Optionally, taking FIG. 18 as an example, multiple resource determining-related information subparts may not overlap in time domain.

Optionally, any one of the resource determining-related information subparts and a time subunit corresponding to the resource determining-related information subpart are temporally consecutive.

Optionally, taking FIG. 18 as an example, any one of the resource determining-related information subparts and a time subunit corresponding to the resource determining-related information are temporally consecutive. That is, following each SCI part, an adjacent symbol or a position one AGC symbol away is a PRS part scheduled by the SCI or a time subunit part containing the PRS part scheduled by the SCI.

Optionally, the multiple resource determining-related information subparts overlap in time domain.

Optionally, taking FIG. 17 as an example, multiple resource determining-related information subparts may overlap in time domain.

Optionally, the multiple resource determining-related information subparts do not overlap in frequency domain.

Optionally, the multiple resource determining-related information subparts may not overlap in frequency domain.

Optionally, the candidate resource further includes a candidate frequency domain resource.

The candidate frequency domain resource corresponding to the time subunit includes K frequency domain resource parts.

Optionally, the candidate resource to which the sidelink positioning reference signal (Sidelink- Positioning Reference Signal, SL-PRS) can be mapped may include a candidate frequency domain resource.

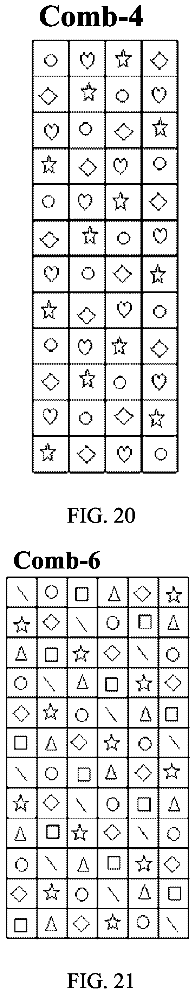

FIG. 19 is a fourteenth schematic diagram of a candidate resource mapping pattern according to an embodiment of this application, FIG. 20 is a fifteenth schematic diagram of a candidate resource mapping pattern according to an embodiment of this application, and FIG. 21 is a sixteenth schematic diagram of a candidate resource mapping pattern according to an embodiment of this application. As shown in FIG. 19, FIG. 20, or FIG. 21, the candidate frequency domain resource corresponding to any time subunit may include K frequency domain resource parts. For example, two frequency domain resource parts are included in FIG. 19, four frequency domain resource parts are included in FIG. 20, and six frequency domain resource parts are included in FIG. 21.

Optionally, different shapes in FIG. 19 to FIG. 21 are used to represent different frequency domain resources.

Optionally, frequency division multiplexing of a comb structure is performed on the K frequency domain resource parts, and a value of K is associated with a value of the comb structure.

Optionally, frequency division multiplexing of a comb structure is performed on the K frequency domain resource parts, and a value of K is associated with a value of the comb structure.

Taking FIG. 19 as an example, the value of the Comb structure is 2 and K=2. Taking FIG. 20 as an example, the value of the Comb structure is 4 and K=4.

Taking FIG. 21 as an example, the value of the Comb structure is 6 and K=6.

Optionally, if the first time unit or the second time unit includes multiple time units, the same number of symbols are used for transmitting the SL-PRS in the time units, optionally 2, 4, or 6.

Optionally, if the first time unit or the second time unit includes multiple time units, the same bandwidth is used for transmitting the SL-PRS in the time units.

Optionally, if the first time unit or the second time unit includes multiple time units, the same starting frequency domain position is used for transmitting the SL-PRS in the time units.

Optionally, if the first time unit or the second time unit includes multiple time units, the same comb value is used for transmitting the SL-PRS in the time units.

Optionally, the resource determining-related information part includes multiple resource determining-related information subparts, and different resource determining-related information subparts correspond to different frequency domain resource parts.

Optionally, different resource determining-related information subparts correspond to different frequency domain resource parts.

Optionally, different resource determining-related information subparts may belong to different frequency domain resource parts.

Optionally, different resource determining-related information subparts may be used for scheduling PRS parts of different frequency domain resource parts.

Optionally, any one of the frequency domain resource parts corresponds to H multiplexed code domain resources, where a value of H is associated with a value of cyclic shift on the frequency domain resource part or a value of H is associated with an OCC value.

Optionally, H code domain resources are multiplexed on any one of the frequency domain resource parts.

Optionally, the value of H may be determined based on the value of cyclic shift (cyclic shift, CS) of the frequency domain resource part.

Optionally, the value of H may be determined based on the OCC value.

Optionally, the resource determining-related information part includes multiple resource determining-related information subparts, and different resource determining-related information subparts correspond to different code domain resource parts.

Optionally, different resource determining-related information subparts correspond to different code domain resource parts.

Optionally, different resource determining-related information subparts may belong to different code domain resource parts.

Optionally, different resource determining-related information subparts may be used for scheduling PRS parts of different code domain resource parts.

Optionally, the first time unit or the second time unit is used for transmitting or receiving a maximum of M physical sidelink shared channel demodulation reference signals.

The value of M satisfies at least one of the following:
M is greater than or equal to M1, indicating that the first time unit or the second time unit is scheduled by a maximum of M1 terminals for transmitting or receiving physical sidelink shared channel demodulation reference signals; or
M is greater than or equal to M2, indicating that the first time unit or the second time unit is scheduled by one terminal for transmitting or receiving a maximum of M2 physical sidelink shared channel demodulation reference signals.

Optionally, one first time unit has a maximum of M SL-PRS resources for the UE to transmit SL-PRS.

Optionally, M is greater than or equal to M1, indicating that the first time unit is scheduled by a maximum of M1 terminals for transmitting or receiving physical sidelink shared channel demodulation reference signals; and/or
optionally, M is greater than or equal to M2, indicating that the first time unit is scheduled by one terminal for transmitting or receiving a maximum of M2 physical sidelink shared channel demodulation reference signals.

Optionally, one second time unit has a maximum of M SL-PRS resources for the UE to transmit SL-PRS.

Optionally, M is greater than or equal to M1, indicating that the second time unit is scheduled by a maximum of M1 terminals for transmitting or receiving physical sidelink shared channel demodulation reference signals; and/or
optionally, M is greater than or equal to M2, indicating that the second time unit is scheduled by one terminal for transmitting or receiving a maximum of M2 physical sidelink shared channel demodulation reference signals.

Optionally, M=L×K×H, where L is the number of time subunits in the first time unit or the second time unit, K is the number of multiplexed frequency domain resource parts in a frequency domain resource corresponding to any one of the time subunits, and H is the number of multiplexed code domain resources in any one of the frequency domain resource parts.

Optionally, one first time unit has a maximum of M SL-PRS resources for the UE to transmit SL-PRS. M=L×K×H, where L is the number of time subunits in the first time unit, K is the number of multiplexed frequency domain resource parts in a frequency domain resource corresponding to any one of the time subunits, and H is the number of multiplexed code domain resources in any one of the frequency domain resource parts.

Optionally, one second time unit has a maximum of M SL-PRS resources for the UE to transmit SL-PRS. M=L×K×H, where L is the number of time subunits in the second time unit, K is the number of multiplexed frequency domain resource parts in a frequency domain resource corresponding to any one of the time subunits, and H is the number of multiplexed code domain resources in any one of the frequency domain resource parts.

Optionally, M1 is determined based on capability, resource pool, network configuration, or terminal configuration of a receive terminal.

Optionally, M1 is related to the terminal capability.

Optionally, M1 is less than or equal to M.

Optionally, M2 is determined based on terminal capability, resource pool, network configuration, or terminal configuration of a transmit terminal.

Optionally, M2 is related to the terminal capability.

Optionally, M2 is less than or equal to M.

Optionally, any one of symbols in the time subunit is used for transmitting or receiving a maximum of N physical sidelink shared channel demodulation reference signals.

The value of N satisfies at least one of the following:
N is greater than or equal to M3, indicating that any one of the symbols is scheduled by a maximum of M3 terminals for transmitting or receiving physical sidelink shared channel demodulation reference signals; or
N is greater than or equal to M4, indicating that any one of the symbols is scheduled by one terminal for transmitting or receiving a maximum of M4 physical sidelink shared channel demodulation reference signals.

Optionally, any one of symbols in one time subunit has a maximum of N SL-PRS resources for the UE to transmit SL-PRS.

Optionally, N is greater than or equal to M3, indicating that any one of the symbols is scheduled by a maximum of M3 terminals for transmitting or receiving physical sidelink shared channel demodulation reference signals; and/or
optionally, N is greater than or equal to M4, indicating that any one of the symbols is scheduled by one terminal for transmitting or receiving a maximum of M4 physical sidelink shared channel demodulation reference signals.

Optionally, N=K×H, where K is the number of multiplexed frequency domain resource parts in a frequency domain resource corresponding to any one of the time subunits, and H is the number of multiplexed code domain resources in any one of the frequency domain resource parts.

Optionally, M3 is determined based on capability, resource pool, network configuration, or terminal configuration of a receive terminal.

Optionally, M3 is related to the terminal capability.

Optionally, M3 is less than or equal to N.

Optionally, M4 is determined based on terminal capability, resource pool, network configuration, or terminal configuration of a transmit terminal.

Optionally, M4 is related to the terminal capability.

Optionally, M4 is less than or equal to N.

Optionally, that the terminal determines a target resource for transmitting the sidelink positioning reference signal from a candidate resource set formed by the candidate resource includes at least one of the following:
the terminal determines the target resource for transmitting the sidelink positioning reference signal from a first resource pool, where the first resource pool includes the candidate resource set;
the terminal determines the target resource for transmitting the sidelink positioning reference signal from an additional resource, where the additional resource includes the candidate resource set; or
the terminal determines the target resource for transmitting the sidelink positioning reference signal from a reserved resource, where the reserved resource includes the candidate resource set.

Optionally, the terminal is configured with at least one of the following for transmitting the target SL-PRS resource:
a first resource pool for SL-PRS transmission;
additional (additional) resources for SL-PRS transmission; or
reserved (reserved) resources for SL-PRS transmission.

Optionally, it may be of the highest priority that the terminal is configured with a reserved (reserved) resource for SL-PRS transmission.

Optionally, the terminal may determine the target resource for transmitting the sidelink positioning reference signal from the first resource pool including the candidate resource.

Optionally, the terminal may determine the target resource for transmitting the sidelink positioning reference signal from the additional (additional) resources including the candidate resource.

Optionally, the terminal may determine the target resource for transmitting the sidelink positioning reference signal from the reserved (reserved) resources including the candidate resource.

Optionally, the target SL-PRS resource may only support a slot format of SL-PRS only (SL-PRS transmission only).

Optionally, that the terminal determines a target resource for transmitting the sidelink positioning reference signal from a candidate resource set formed by the candidate resource includes:
the terminal determines, based on indication information of the target resource, the target resource for transmitting the sidelink positioning reference signal from the candidate resource set formed by the candidate resource; where
the indication information of the target resource includes at least one of the following items of the sidelink positioning reference signal (SL-PRS):
   time resource allocation indicator value;
   start position and length of time domain;
   time division multiplexing configuration of sidelink; and
   resource pattern of the sidelink positioning reference signal (SL-PRS pattern) or configuration information of the sidelink positioning reference signal (SL-PRS configuration information).

The indication information of the target resource includes at least one of the following items of the SL-PRS:
time resource allocation indicator value;
start position and length of time domain;
time division multiplexing configuration of sidelink; and
SL-PRS pattern or SL-PRS configuration information.

Optionally, that the terminal determines a target resource for transmitting the sidelink positioning reference signal from a candidate resource set formed by the candidate resource includes:
the terminal determines, based on indication information of the resource determining-related information, the target resource for transmitting the sidelink positioning reference signal from the candidate resource set formed by the candidate resource; where
the indication information of the resource determining-related information includes at least one of the following items of the SL-PRS:
   time resource allocation indicator value;
   start position and length of time domain;
   time division multiplexing configuration of sidelink; and
   SL-PRS pattern or SL-PRS configuration information.

Optionally, the terminal may determine, based on time resource allocation indicator value (TRIV), the target resource for transmitting the sidelink positioning reference signal from the candidate resource set formed by the candidate resource.

Optionally, the terminal may determine, based on the start position and length of time domain, the target resource for transmitting the sidelink positioning reference signal from the candidate resource set formed by the candidate resource.

Optionally, the terminal may determine, based on the sidelink time division multiplexing configuration (sl-TDD-Configuration), the target resource for transmitting the sidelink positioning reference signal from the candidate resource set formed by the candidate resource.

Optionally, the terminal may determine, based on the SL-PRS pattern or SL-PRS configuration information, the target resource for transmitting the sidelink positioning reference signal from the candidate resource set formed by the candidate resource.

Optionally, that the terminal determines a target resource for transmitting the sidelink positioning reference signal from a candidate resource set formed by the candidate resource includes:
the terminal determines, based on a first rule, the target resource for transmitting the sidelink positioning reference signal from the candidate resource set formed by the candidate resource.

Optionally, the terminal may determine, based on the first rule, the target resource for transmitting the sidelink positioning reference signal from the candidate resource set formed by the candidate resource.

Optionally, the first rule includes at least one of the following:
the target resource for transmitting the sidelink positioning reference signal is determined based on a priority of SL-PRS transmission;
the target resource for transmitting the sidelink positioning reference signal is determined based on a priority of SL-PRS transmission;
the target resource for transmitting the sidelink positioning reference signal is determined based on the intercepted SCI and the RSRP of the DMRS; and
the target resource for transmitting the sidelink positioning reference signal is determined based on destination ID, source ID, member ID and/or identification information of the SL-PRS.

Optionally, that the terminal determines a target resource for transmitting the sidelink positioning reference signal from a candidate resource set formed by the candidate resource includes:
the terminal determines the scheduling situation of the candidate resource in a second resource pool; and
the terminal determines, based on the scheduling situation, the target resource for transmitting the sidelink positioning reference signal.

Optionally, the terminal may detect the scheduling situation of the candidate SL-PRS resource in the second resource pool, determine the resource occupation of the candidate SL-PRS resource, or select a resource that can be used by the terminal to transmit the SL-PRS.

Optionally, the scheduling situation of SL-PRS may be detected. The scheduling situation of SL-PRS is determined based on 1st SCI, the RSRP of the DMRS corresponding to PSCCH or the RSRP of the SL-PRS, and a position of the target SL-PRS resource of the SL-PRS indicated by SCI.

Optionally, the second resource pool does not include the candidate resource set containing the target resource.

Optionally, the second resource pool containing the candidate resource of which the scheduling situation is detected may not include the candidate resource set containing the target resource.

Optionally, the second resource pool includes the candidate resource set, and a resource set for scheduling physical sidelink shared channels is different from the candidate resource set.

Optionally, the second resource pool includes the target SL-PRS resource, but the target SL-PRS resource needs to be excluded from resources for PSSCH scheduling.

Optionally, the indication information of the target resource includes information of a resource window, and the resource window is used for sensing the scheduling situation of the candidate resource; where
the information of the resource window includes at least one of the following:
a window length of the resource window; and
a sensing signal for sensing a scheduling situation of the candidate resource.

Optionally, the indication information of the target resource includes resource window information for sensing the scheduling situation of SL-PRS, which specifically includes at least one of the following:
(a) a window length of the resource window for sensing the scheduling situation of SL-PRS; and
(b) a sensing signal (sensing signal) for sensing the scheduling situation of SL-PRS, for example, the DMRS of PSCCH or the RSRP of SL-PRS.

Optionally, the target SL-PRS resource information may be a resource for mode 1 or mode 2.

In this embodiment of this application, a slot format dedicated to SL-PRS transmission is set, so that SL-PRS transmission and resource selection can be implemented more easily and more terminals can utilize the same resource for SL-PRS mapping.

In the embodiments of this application, the candidate resource set used for the sidelink positioning reference signal includes one or more candidate resources. The candidate resource is only used for transmitting the sidelink positioning reference signal or used for transmitting the sidelink positioning reference signal and the resource determining-related information. In this way, the target resource for transmitting the sidelink positioning reference signal is determined from the candidate resource set, so as to implement resource mapping of the sidelink positioning reference signal, satisfying the resource requirements of positioning and avoiding data interference on signals.

The resource determining method provided in the embodiments of this application may be executed by a resource determining apparatus. In the embodiments of this application, the resource determining method being executed by the resource determining apparatus is used as an example to describe the resource determining apparatus according to the embodiments of this application.

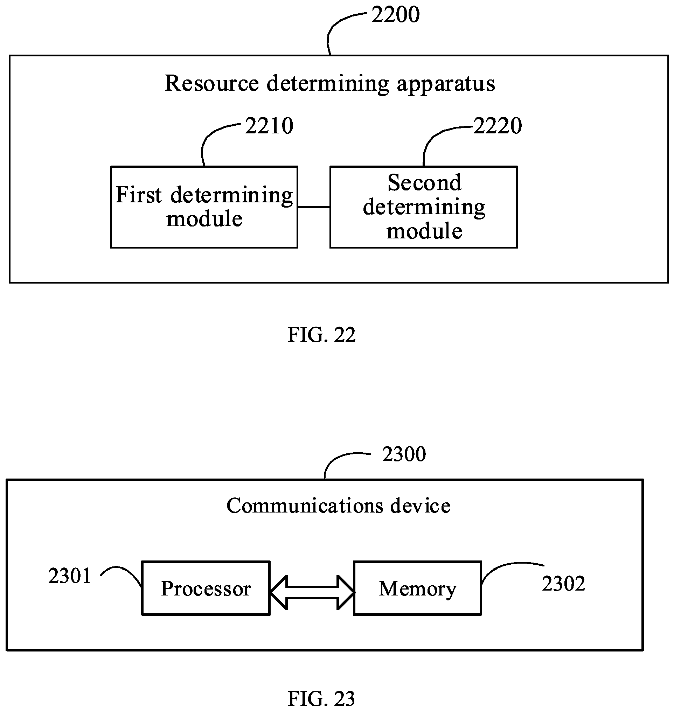

FIG. 22 is a schematic structural diagram of a resource determining apparatus according to an embodiment of this application. As shown in FIG. 22, the resource determining apparatus 2200 includes:
a first determining module 2210, configured to determine a candidate resource of a sidelink positioning reference signal; and
a second determining module 2220, configured to determine a target resource for transmitting the sidelink positioning reference signal from a candidate resource set formed by the candidate resource; where
the candidate resource includes a candidate time domain resource, and any one of the candidate time domain resource includes at least one of the following:
   a first time unit, where the first time unit is only used for transmitting the sidelink positioning reference signal; and
   a second time unit, where the second time unit is used for transmitting the sidelink positioning reference signal and resource determining-related information.

In the embodiments of this application, the candidate resource set used for the sidelink positioning reference signal includes one or more candidate resources. The candidate resource is only used for transmitting the sidelink positioning reference signal or used for transmitting the sidelink positioning reference signal and the resource determining-related information. In this way, the target resource for transmitting the sidelink positioning reference signal is determined from the candidate resource set, so as to implement resource mapping of the sidelink positioning reference signal, satisfying the resource requirements of positioning and avoiding data interference on signals.

Optionally, the resource determining-related information includes at least one of the following:
sidelink control information, where the sidelink control information is used for scheduling the sidelink positioning reference signal; or
a sensing signal for sensing a scheduling situation of the candidate resource.

Optionally, the sidelink control information only includes 1st SCI.

Optionally, the first time unit includes one or more time subunits, and any one of the time subunits is the smallest unit for resource scheduling of the sidelink positioning reference signal.

Optionally, the second time unit includes a resource determining-related information part and one or more time subunits, and any one of the time subunits is the smallest unit for resource scheduling of the sidelink positioning reference signal; where the resource determining-related information part includes sidelink control information mapping.

Optionally, the time subunit and the resource determining-related information part do not overlap in time domain.

Optionally, a part of the time subunit and the resource determining-related information part overlap in time domain.

Optionally, the second time unit includes one or more time subunits, and any one of the time subunits is used for transmitting the sidelink positioning reference signal and the resource determining-related information.

Optionally, bandwidth corresponding to the time subunit is greater than bandwidth corresponding to the resource determining-related information part.

Optionally, one of the time subunits includes a first part, a second part, and a third part, where
the first part is used for automatic gain control, the second part is used for transmitting a sidelink positioning reference signal, and the third part includes a gap Gap.

Optionally, the first part is the first symbol in the time subunit, the third part is the last symbol in the time subunit, and the second part is a consecutive symbol part from the second symbol to the penultimate symbol in the time subunit.

Optionally, one of the time subunits includes a fourth part and a fifth part, where the fourth part is used for transmitting a sidelink positioning reference signal and the fifth part includes a gap Gap.

Optionally, the fifth part is the last symbol in the time subunit, and the fourth part is a consecutive symbol part from the first symbol to the penultimate symbol in the time subunit.

Optionally, in a case that the time subunit is not the last part of a time unit containing the time subunit, the time subunit includes a sixth part and a seventh part, where the sixth part is used for automatic gain control and the seventh part is used for transmitting a sidelink positioning reference signal after being scheduled.

Optionally, the sixth part is the first symbol in the time subunit, and the seventh part is a consecutive symbol part from the second symbol to the last symbol in the time subunit.

Optionally, in a case that the time subunit is the last part of a time unit containing the time subunit, the time subunit includes an eighth part, a ninth part, and a tenth part, where the eighth part is used for automatic gain control, the ninth part is used for transmitting a sidelink positioning reference signal after being scheduled, and the tenth part includes a gap Gap.

Optionally, the time subunit includes an eleventh part, and the eleventh part is used for transmitting a sidelink positioning reference signal after being scheduled.

Optionally, in a case that the time subunit is not the last part of a time unit containing the time subunit, the time subunit includes an eleventh part, and the eleventh part is used for transmitting a sidelink positioning reference signal after being scheduled.

Optionally, one or more time subunits belonging to one time unit includes only one gap Gap.

Optionally, one or more time subunits belonging to one time unit only includes a part for automatic gain control.

Optionally, P time subunits belonging to one time unit include a total of P gaps Gaps, where P is a positive integer greater than or equal to 1.

Optionally, Q time subunits belonging to one time unit include a total of Q parts for automatic gain control, where Q is a positive integer greater than or equal to 1.

Optionally, multiple time subunits belonging to one time unit are used for at least one of the following:
transmitting sidelink positioning reference signals from different terminals;
transmitting multiple sidelink positioning reference signals from one terminal; and
transmitting the multiple sidelink positioning reference signals.

Optionally, the resource determining-related information part includes multiple resource determining-related information subparts, and different resource determining-related information subparts correspond to different time subunits.

Optionally, the resource determining-related information subpart includes at least one of the following:
sidelink control information, where the sidelink control information is used for scheduling a sidelink positioning reference signal corresponding to the time subunit; or
a sensing signal for sensing a scheduling situation of the time subunit.

Optionally, the multiple resource determining-related information subparts are used for at least one of the following:
being scheduled by one terminal for transmitting multiple sidelink positioning reference signals; and
being scheduled by multiple terminals for transmitting a sidelink positioning reference signal.

Optionally, the multiple resource determining-related information subparts do not overlap in time domain.

Optionally, any one of the resource determining-related information subparts and a time subunit corresponding to the resource determining-related information subpart are temporally consecutive.

Optionally, the multiple resource determining-related information subparts overlap in time domain.

Optionally, the multiple resource determining-related information subparts do not overlap in frequency domain.

Optionally, the candidate resource further includes a candidate frequency domain resource.

The candidate frequency domain resource corresponding to the time subunit includes K frequency domain resource parts.

Optionally, frequency division multiplexing of a comb structure is performed on the K frequency domain resource parts, and a value of K is associated with a value of the comb structure.

Optionally, the resource determining-related information part includes multiple resource determining-related information subparts, and different resource determining-related information subparts correspond to different frequency domain resource parts.

Optionally, any one of the frequency domain resource parts corresponds to H multiplexed code domain resources, where a value of H is associated with a value of cyclic shift on the frequency domain resource part or a value of H is associated with an OCC value.

Optionally, the resource determining-related information part includes multiple resource determining-related information subparts, and different resource determining-related information subparts correspond to different code domain resource parts.

Optionally, the first time unit or the second time unit is used for transmitting or receiving a maximum of M physical sidelink shared channel demodulation reference signals.

The value of M satisfies at least one of the following:
M is greater than or equal to M1, indicating that the first time unit or the second time unit is scheduled by a maximum of M1 terminals for transmitting or receiving physical sidelink shared channel demodulation reference signals; or
M is greater than or equal to M2, indicating that the first time unit or the second time unit is scheduled by one terminal for transmitting or receiving a maximum of M2 physical sidelink shared channel demodulation reference signals.

Optionally, M=L×K×H, where L is the number of time subunits in the first time unit or the second time unit, K is the number of multiplexed frequency domain resource parts in a frequency domain resource corresponding to any one of the time subunits, and H is the number of multiplexed code domain resources in any one of the frequency domain resource parts.

Optionally, M1 is determined based on capability, resource pool, network configuration, or terminal configuration of a receive terminal.

Optionally, M2 is determined based on terminal capability, resource pool, network configuration, or terminal configuration of a transmit terminal.

Optionally, any one of symbols in the time subunit is used for transmitting or receiving a maximum of N physical sidelink shared channel demodulation reference signals.

The value of N satisfies at least one of the following:
N is greater than or equal to M3, indicating that any one of the symbols is scheduled by a maximum of M3 terminals for transmitting or receiving physical sidelink shared channel demodulation reference signals; or
N is greater than or equal to M4, indicating that any one of the symbols is scheduled by one terminal for transmitting or receiving a maximum of M4 physical sidelink shared channel demodulation reference signals.

Optionally, N=K×H, where K is the number of multiplexed frequency domain resource parts in a frequency domain resource corresponding to any one of the time subunits, and H is the number of multiplexed code domain resources in any one of the frequency domain resource parts.

Optionally, M3 is determined based on capability, resource pool, network configuration, or terminal configuration of a receive terminal.

Optionally, M4 is determined based on terminal capability, resource pool, network configuration, or terminal configuration of a transmit terminal.

Optionally, the second determining module 2220 is specifically configured for at least one of the following:
determining the target resource for transmitting the sidelink positioning reference signal from a first resource pool, where the first resource pool includes the candidate resource set;
determining the target resource for transmitting the sidelink positioning reference signal from an additional resource, where the additional resource includes the candidate resource set; or
determining the target resource for transmitting the sidelink positioning reference signal from a reserved resource, where the reserved resource includes the candidate resource set.

Optionally, the second determining module 2220 is specifically configured to:
determine, based on indication information of the target resource, the target resource for transmitting the sidelink positioning reference signal from the candidate resource set formed by the candidate resource; where
the indication information of the target resource includes at least one of the following items of the sidelink positioning reference signal:
   time resource allocation indicator value;
   start position and length of time domain;
   time division multiplexing configuration of sidelink; and
   resource pattern of the sidelink positioning reference signal or configuration information of the sidelink positioning reference signal.

Optionally, the second determining module 2220 is specifically configured to:
the terminal determines, based on indication information of the resource determining-related information, the target resource for transmitting the sidelink positioning reference signal from the candidate resource set formed by the candidate resource; where
the indication information of the resource determining-related information includes at least one of the following items of the sidelink positioning reference signal:
   time resource allocation indicator value;
   start position and length of time domain;
   time division multiplexing configuration of sidelink; and
   SL-PRS pattern or SL-PRS configuration information.

Optionally, the second determining module 2220 is specifically configured to:
determine, based on a first rule, the target resource for transmitting the sidelink positioning reference signal from the candidate resource set formed by the candidate resource.

Optionally, the second determining module is specifically configured to:
detect the scheduling situation of the candidate resource in a second resource pool; and
determine, based on the scheduling situation, the target resource for transmitting the sidelink positioning reference signal.

Optionally, the second resource pool does not include the candidate resource set containing the target resource.

Optionally, the second resource pool includes the candidate resource set, and a resource set for scheduling physical sidelink shared channels is different from the candidate resource set.

Optionally, the indication information of the target resource includes information of a resource window, and the resource window is used for sensing the scheduling situation of the candidate resource; where
the information of the resource window includes at least one of the following:
a window length of the resource window; and
a sensing signal for sensing a scheduling situation of the candidate resource.

In the embodiments of this application, the candidate resource set used for the sidelink positioning reference signal includes one or more candidate resources. The candidate resource is only used for transmitting the sidelink positioning reference signal or used for transmitting the sidelink positioning reference signal and the resource determining-related information. In this way, the target resource for transmitting the sidelink positioning reference signal is determined from the candidate resource set, so as to implement resource mapping of the sidelink positioning reference signal, satisfying the resource requirements of positioning and avoiding data interference on signals.

The resource determining apparatus according to the embodiments of this application may be an electronic device or a component in an electronic device, for example, an integrated circuit or a chip. The electronic device may be a terminal or another device except the terminal. For example, the electronic device may be a mobile phone, a tablet computer, a notebook computer, a palmtop computer, an in-vehicle electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or the like, and the electronic device may also be a server, a network attached storage (Network Attached Storage, NAS), a personal computer (personal computer, PC), a television (television, TV), a teller machine, a self-service machine, or the like. This is not specifically limited in the embodiments of this application.

The resource determining apparatus according to the embodiments of this application may be an apparatus with an operating system. The operating system may be an Android (Android) operating system, an iOS operating system, or another possible operating system. This is not specifically limited in the embodiments of this application.

The resource determining apparatus provided in the embodiments of this application can implement the processes implemented by the method embodiment illustrated in FIG. 5 to FIG. 21, with the same technical effects achieved. To avoid repetition, details are not described herein again.

Optionally, FIG. 23 is a schematic structural diagram of a communications device according to an embodiment of this application. As shown in FIG. 23, an embodiment of this application further provides a communications device 2300 including a processor 2301 and a memory 2302, and the memory 2302 stores a program or instruction capable of running on the processor 2301. For example, in a case that the communications device 2300 is a terminal, when the program or instruction is executed by the processor 2301, the steps in the forgoing embodiments of the resource determining method are implemented, with the same technical effects achieved. In a case that the communications device 2300 is a network-side device, when the program or instruction is executed by the processor 2301, the steps in the forgoing embodiments of the resource determining method are implemented, with the same technical effects achieved. To avoid repetition, details are not described herein again.

An embodiment of this application further provides a terminal, including a processor and a communications interface, where the processor is configured to:
determine a candidate resource of a sidelink positioning reference signal; and
determine a target resource for transmitting the sidelink positioning reference signal from a candidate resource set formed by the candidate resource; where
the candidate resource includes a candidate time domain resource, and any one of the candidate time domain resource includes at least one of the following:
   a first time unit, where the first time unit is only used for transmitting the sidelink positioning reference signal; and
   a second time unit, where the second time unit is used for transmitting the sidelink positioning reference signal and resource determining-related information.

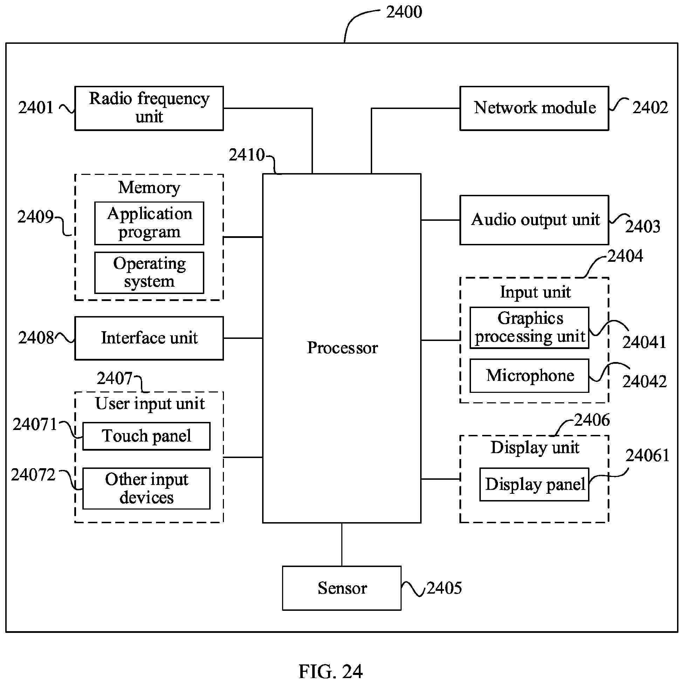

This terminal embodiment corresponds to the foregoing method embodiments used on the terminal side. All processes and implementations in the foregoing method embodiments are applicable to this terminal embodiment, with the same technical effects achieved. Specifically, FIG. 24 is a schematic diagram of a hardware structure of a terminal implementing the embodiments of this application.

The terminal 2400 includes but is not limited to at least some components of a radio frequency unit 2401, a network module 2402, an audio output unit 2403, an input unit 2404, a sensor 2405, a display unit 2406, a user input unit 2407, an interface unit 2408, a memory 2409, and a processor 2410.

Persons skilled in the art can understand that the terminal 2400 may further include a power source (for example, a battery) for supplying power to the components. The power source may be logically connected to the processor 2410 through a power management system. In this way, functions such as charge management, discharge management, and power consumption management are implemented by using the power management system. The structure of the terminal shown in FIG. 24 does not constitute a limitation on the terminal. The terminal may include more or fewer components than shown in the figure, or combine some components, or have a different component arrangement. Details are not described herein.

It should be understood that in this embodiment of this application, the input unit 2404 may include a graphics processing unit (Graphics Processing Unit, GPU) 24041 and a microphone 24042. The graphics processing unit 24041 processes image data of a static picture or a video that is obtained by an image capture apparatus (for example, a camera) in a video capture mode or an image capture mode. The display unit 2406 may include a display panel 24061. The display panel 24061 may be configured in a form of a liquid crystal display, an organic light-emitting diode, or the like. The user input unit 2407 includes at least one of a touch panel 24071 and other input devices 24072. The touch panel 24071 is also referred to as a touchscreen. The touch panel 24071 may include two parts: a touch detection apparatus and a touch controller. The other input devices 24072 may include but are not limited to a physical keyboard, a functional button (such as a volume control button or a power on/off button), a trackball, a mouse, and a joystick. Details are not described herein.

In this embodiment of this application, after receiving downlink data from the network-side device, the radio frequency circuit 2401 may transmit it to the processor 2410 for processing. In addition, the radio frequency circuit 2401 may transmit uplink data to the network-side device. Generally, the radio frequency unit 2401 includes but is not limited to an antenna, an amplifier, a transceiver, a coupler, a low noise amplifier, a duplexer, and the like.

The memory 2409 may be configured to store software programs or instructions, and various data. The memory 2409 may mainly include a first storage area where the programs or instructions are stored and a second storage area where data is stored. The first storage area may store an operating system, an application program or instruction required by at least one function (for example, an audio playing function or an image playing function), and the like. Further, the memory 2409 may include a volatile memory or nonvolatile memory, or the memory 2409 may include both volatile and nonvolatile memories. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 2409 in this embodiment of this application includes but is not limited to these and any other suitable types of memories.

The processor 2410 may include one or more processing units. Optionally, the processor 2410 integrates an application processor and a modem processor. The application processor mainly processes operations involving an operating system, a user interface, an application program, and the like. The modem processor mainly processes wireless communication signals, for example, a baseband processor. It can be understood that the modem processor may alternatively be not integrated in the processor 2410.

The processor 2410 is configured to:
determine a candidate resource of a sidelink positioning reference signal; and
determine a target resource for transmitting the sidelink positioning reference signal from a candidate resource set formed by the candidate resource; where
the candidate resource includes a candidate time domain resource, and any one of the candidate time domain resource includes at least one of the following:
   a first time unit, where the first time unit is only used for transmitting the sidelink positioning reference signal; and
   a second time unit, where the second time unit is used for transmitting the sidelink positioning reference signal and resource determining-related information.

In the embodiments of this application, the candidate resource set used for the sidelink positioning reference signal includes one or more candidate resources. The candidate resource is only used for transmitting the sidelink positioning reference signal or used for transmitting the sidelink positioning reference signal and the resource determining-related information. In this way, the target resource for transmitting the sidelink positioning reference signal is determined from the candidate resource set, so as to implement resource mapping of the sidelink positioning reference signal, satisfying the resource requirements of positioning and avoiding data interference on signals.

Optionally, the resource determining-related information includes at least one of the following:
sidelink control information, where the sidelink control information is used for scheduling the sidelink positioning reference signal; or
a sensing signal for sensing a scheduling situation of the candidate resource.

Optionally, the sidelink control information only includes 1st SCI.

Optionally, the first time unit includes one or more time subunits, and any one of the time subunits is the smallest unit for resource scheduling of the sidelink positioning reference signal.

Optionally, the second time unit includes a resource determining-related information part and one or more time subunits, and any one of the time subunits is the smallest unit for resource scheduling of the sidelink positioning reference signal; where the resource determining-related information part includes sidelink control information mapping.

Optionally, the time subunit and the resource determining-related information part do not overlap in time domain.

Optionally, a part of the time subunit and the resource determining-related information part overlap in time domain.

Optionally, the second time unit includes one or more time subunits, and any one of the time subunits is used for transmitting the sidelink positioning reference signal and the resource determining-related information.

Optionally, bandwidth corresponding to the time subunit is greater than bandwidth corresponding to the resource determining-related information part.

Optionally, one of the time subunits includes a first part, a second part, and a third part, where

the first part is used for automatic gain control, the second part is used for transmitting a sidelink positioning reference signal, and the third part includes a gap Gap.

Optionally, the first part is the first symbol in the time subunit, the third part is the last symbol in the time subunit, and the second part is a consecutive symbol part from the second symbol to the penultimate symbol in the time subunit.

Optionally, one of the time subunits includes a fourth part and a fifth part, where the fourth part is used for transmitting a sidelink positioning reference signal and the fifth part includes a gap Gap.

Optionally, the fifth part is the last symbol in the time subunit, and the fourth part is a consecutive symbol part from the first symbol to the penultimate symbol in the time subunit.

Optionally, in a case that the time subunit is not the last part of a time unit containing the time subunit, the time subunit includes a sixth part and a seventh part, where the sixth part is used for automatic gain control and the seventh part is used for transmitting a sidelink positioning reference signal after being scheduled.

Optionally, the sixth part is the first symbol in the time subunit, and the seventh part is a consecutive symbol part from the second symbol to the last symbol in the time subunit.

Optionally, in a case that the time subunit is the last part of a time unit containing the time subunit, the time subunit includes an eighth part, a ninth part, and a tenth part, where the eighth part is used for automatic gain control, the ninth part is used for transmitting a sidelink positioning reference signal after being scheduled, and the tenth part includes a gap Gap.

Optionally, the time subunit includes an eleventh part, and the eleventh part is used for transmitting a sidelink positioning reference signal after being scheduled.

Optionally, in a case that the time subunit is not the last part of a time unit containing the time subunit, the time subunit includes an eleventh part, and the eleventh part is used for transmitting a sidelink positioning reference signal after being scheduled.

Optionally, one or more time subunits belonging to one time unit includes only one gap Gap.

Optionally, one or more time subunits belonging to one time unit only includes a part for automatic gain control.

Optionally, P time subunits belonging to one time unit include a total of P gaps Gaps, where P is a positive integer greater than or equal to 1.

Optionally, Q time subunits belonging to one time unit include a total of Q parts for automatic gain control, where Q is a positive integer greater than or equal to 1.

Optionally, multiple time subunits belonging to one time unit are used for at least one of the following:
transmitting sidelink positioning reference signals from different terminals;
transmitting multiple sidelink positioning reference signals from one terminal; and
transmitting the multiple sidelink positioning reference signals.

Optionally, the resource determining-related information part includes multiple resource determining-related information subparts, and different resource determining-related information subparts correspond to different time subunits.

Optionally, the resource determining-related information subpart includes at least one of the following:
sidelink control information, where the sidelink control information is used for scheduling a sidelink positioning reference signal corresponding to the time subunit; or
a sensing signal for sensing a scheduling situation of the time subunit.

Optionally, the multiple resource determining-related information subparts are used for at least one of the following:
being scheduled by one terminal for transmitting multiple sidelink positioning reference signals; and
being scheduled by multiple terminals for transmitting a sidelink positioning reference signal.

Optionally, the multiple resource determining-related information subparts do not overlap in time domain.

Optionally, any one of the resource determining-related information subparts and a time subunit corresponding to the resource determining-related information subpart are temporally consecutive.

Optionally, the multiple resource determining-related information subparts overlap in time domain.

Optionally, the multiple resource determining-related information subparts do not overlap in frequency domain.

Optionally, the candidate resource further includes a candidate frequency domain resource.

The candidate frequency domain resource corresponding to the time subunit includes K frequency domain resource parts.

Optionally, frequency division multiplexing of a comb structure is performed on the K frequency domain resource parts, and a value of K is associated with a value of the comb structure.

Optionally, the resource determining-related information part includes multiple resource determining-related information subparts, and different resource determining-related information subparts correspond to different frequency domain resource parts.

Optionally, any one of the frequency domain resource parts corresponds to H multiplexed code domain resources, where a value of H is associated with a value of cyclic shift on the frequency domain resource part or a value of H is associated with an OCC value.

Optionally, the resource determining-related information part includes multiple resource determining-related information subparts, and different resource determining-related information subparts correspond to different code domain resource parts.

Optionally, the first time unit or the second time unit is used for transmitting or receiving a maximum of M physical sidelink shared channel demodulation reference signals.

The value of M satisfies at least one of the following:
M is greater than or equal to M1, indicating that the first time unit or the second time unit is scheduled by a maximum of M1 terminals for transmitting or receiving physical sidelink shared channel demodulation reference signals; or
M is greater than or equal to M2, indicating that the first time unit or the second time unit is scheduled by one terminal for transmitting or receiving a maximum of M2 physical sidelink shared channel demodulation reference signals.

Optionally, M=L×K×H, where L is the number of time subunits in the first time unit or the second time unit, K is the number of multiplexed frequency domain resource parts in a frequency domain resource corresponding to any one of the time subunits, and H is the number of multiplexed code domain resources in any one of the frequency domain resource parts.

Optionally, M1 is determined based on capability, resource pool, network configuration, or terminal configuration of a receive terminal.

Optionally, M2 is determined based on terminal capability, resource pool, network configuration, or terminal configuration of a transmit terminal.

Optionally, any one of symbols in the time subunit is used for transmitting or receiving a maximum of N physical sidelink shared channel demodulation reference signals.

The value of N satisfies at least one of the following:
N is greater than or equal to M3, indicating that any one of the symbols is scheduled by a maximum of M3 terminals for transmitting or receiving physical sidelink shared channel demodulation reference signals; or
N is greater than or equal to M4, indicating that any one of the symbols is scheduled by one terminal for transmitting or receiving a maximum of M4 physical sidelink shared channel demodulation reference signals.

Optionally, N=K×H, where K is the number of multiplexed frequency domain resource parts in a frequency domain resource corresponding to any one of the time subunits, and H is the number of multiplexed code domain resources in any one of the frequency domain resource parts.

Optionally, M3 is determined based on capability, resource pool, network configuration, or terminal configuration of a receive terminal.

Optionally, M4 is determined based on terminal capability, resource pool, network configuration, or terminal configuration of a transmit terminal.

Optionally, the processor 2410 is configured for at least one of the following:
determining the target resource for transmitting the sidelink positioning reference signal from a first resource pool, where the first resource pool includes the candidate resource set;
determining the target resource for transmitting the sidelink positioning reference signal from an additional resource, where the additional resource includes the candidate resource set; or
determining the target resource for transmitting the sidelink positioning reference signal from a reserved resource, where the reserved resource includes the candidate resource set.

Optionally, the processor 2410 is configured to:
determine, based on indication information of the target resource, the target resource for transmitting the sidelink positioning reference signal from the candidate resource set formed by the candidate resource; where
the indication information of the target resource includes at least one of the following items of the sidelink positioning reference signal:
   time resource allocation indicator value;
   start position and length of time domain;
   time division multiplexing configuration of sidelink; and
   resource pattern of the sidelink positioning reference signal or configuration information of the sidelink positioning reference signal.

Optionally, the processor 2410 is configured to:
the terminal determines, based on indication information of the resource determining-related information, the target resource for transmitting the sidelink positioning reference signal from the candidate resource set formed by the candidate resource; where
the indication information of the resource determining-related information includes at least one of the following items of the SL-PRS:
   time resource allocation indicator value;
   start position and length of time domain;
   time division multiplexing configuration of sidelink; and
   SL-PRS pattern or SL-PRS configuration information.

Optionally, the processor 2410 is configured to:
determine, based on a first rule, the target resource for transmitting the sidelink positioning reference signal from the candidate resource set formed by the candidate resource.

Optionally, the second determining module is specifically configured to:
detect the scheduling situation of the candidate resource in a second resource pool; and
determine, based on the scheduling situation, the target resource for transmitting the sidelink positioning reference signal.

Optionally, the second resource pool does not include the candidate resource set containing the target resource.

Optionally, the second resource pool includes the candidate resource set, and a resource set for scheduling physical sidelink shared channels is different from the candidate resource set.

Optionally, the indication information of the target resource includes information of a resource window, and the resource window is used for sensing the scheduling situation of the candidate resource; where the information of the resource window includes at least one of the following:
a window length of the resource window; and
a sensing signal for sensing a scheduling situation of the candidate resource.

In the embodiments of this application, the candidate resource set used for the sidelink positioning reference signal includes one or more candidate resources. The candidate resource is only used for transmitting the sidelink positioning reference signal or used for transmitting the sidelink positioning reference signal and the resource determining-related information. In this way, the target resource for transmitting the sidelink positioning reference signal is determined from the candidate resource set, so as to implement resource mapping of the sidelink positioning reference signal, satisfying the resource requirements of positioning and avoiding data interference on signals.

An embodiment of this application further provides a readable storage medium, where the readable storage medium stores a program or instruction, and when the program or instruction is executed by a processor, the processes of the foregoing embodiments of the resource determining method are implemented, with the same technical effects achieved. To avoid repetition, details are not described herein again.

The processor is the processor in the terminal in the foregoing embodiments. The readable storage medium includes a computer-readable storage medium, for example, a computer read-only memory, a random access memory, a magnetic disk, or an optical disc.

An embodiment of this application further provides a chip, where the chip includes a processor and a communications interface, the communications interface is coupled to the processor, and the processor is configured to run a program or instruction to implement the processes of the foregoing embodiments of the resource determining method, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium. The computer program/program product is executed by at least one processor to implement the processes of the foregoing embodiments of the resource determining method, with the same technical effects achieved. To avoid repetition, details are not described herein again.

An embodiment of this application further provides a resource determining system including a terminal, where the terminal can be configured to perform the steps of the foregoing resource determining method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a computer software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A resource determining method, comprising:
determining, by a terminal, a candidate resource of a sidelink positioning reference signal; and
determining, by the terminal, a target resource for transmitting the sidelink positioning reference signal from a candidate resource set formed by the candidate resource; wherein
the candidate resource comprises a candidate time domain resource, and any one of the candidate time domain resource comprises at least one of the following:
a first time unit, wherein the first time unit is only used for transmitting the sidelink positioning reference signal; and
a second time unit, wherein the second time unit is used for transmitting the sidelink positioning reference signal and resource determining-related information.

2. The resource determining method according to claim 1, wherein the resource determining-related information comprises at least one of the following:
sidelink control information, wherein the sidelink control information is used for scheduling the sidelink positioning reference signal; or
a sensing signal for sensing a scheduling situation of the candidate resource.

3. The resource determining method according to claim 2, wherein the sidelink control information only comprises 1st SCI.

4. The resource determining method according to any one of claims 1 to 3, wherein the first time unit comprises one or more time subunits, and any one of the time subunits is the smallest unit for resource scheduling of the sidelink positioning reference signal.

5. The resource determining method according to any one of claims 1 to 3, wherein the second time unit comprises a resource determining-related information part and one or more time subunits, and any one of the time subunits is the smallest unit for resource scheduling of the sidelink positioning reference signal; wherein the resource determining-related information part comprises sidelink control information mapping.

6. The resource determining method according to claim 5, wherein the time subunit and the resource determining-related information part do not overlap in time domain.

7. The resource determining method according to claim 5, wherein a part of the time subunit and the resource determining-related information part overlap in time domain.

8. The resource determining method according to any one of claims 1 to 3, wherein the second time unit comprises one or more time subunits, and any one of the time subunits is used for transmitting the sidelink positioning reference signal and the resource determining-related information.

9. The resource determining method according to any one of claims 4 to 8, wherein bandwidth corresponding to the time subunit is greater than bandwidth corresponding to the resource determining-related information part.

10. The resource determining method according to any one of claims 4 to 9, wherein one of the time subunits comprises a first part, a second part, and a third part; wherein
the first part is used for automatic gain control, the second part is used for transmitting a sidelink positioning reference signal, and the third part comprises a gap Gap.

11. The resource determining method according to claim 10, wherein the first part is the first symbol in the time subunit, the third part is the last symbol in the time subunit, and the second part is a consecutive symbol part from the second symbol to the penultimate symbol in the time subunit.

12. The resource determining method according to any one of claims 4 to 9, wherein one of the time subunits comprises a fourth part and a fifth part, wherein the fourth part is used for transmitting a sidelink positioning reference signal and the fifth part comprises a gap Gap.

13. The resource determining method according to claim 12, wherein the fifth part is the last symbol in the time subunit, and the fourth part is a consecutive symbol part from the first symbol to the penultimate symbol in the time subunit.

14. The resource determining method according to any one of claims 4 to 9, wherein in a case that the time subunit is not the last part of a time unit containing the time subunit, the time subunit comprises a sixth part and a seventh part, wherein the sixth part is used for automatic gain control and the seventh part is used for transmitting a sidelink positioning reference signal after being scheduled.

15. The resource determining method according to claim 14, wherein the sixth part is the first symbol in the time subunit, and the seventh part is a consecutive symbol part from the second symbol to the last symbol in the time subunit.

16. The resource determining method according to claim 14, wherein in a case that the time subunit is the last part of a time unit containing the time subunit, the time subunit comprises an eighth part, a ninth part, and a tenth part, wherein the eighth part is used for automatic gain control, the ninth part is used for transmitting a sidelink positioning reference signal after being scheduled, and the tenth part comprises a gap Gap.

17. The resource determining method according to any one of claims 4 to 9, wherein the time subunit comprises an eleventh part, and the eleventh part is used for transmitting a sidelink positioning reference signal after being scheduled.

18. The resource determining method according to claim 17, wherein in a case that the time subunit is not the last part of a time unit containing the time subunit, the time subunit comprises an eleventh part, and the eleventh part is used for transmitting a sidelink positioning reference signal after being scheduled.

19. The resource determining method according to any one of claims 4 to 18, wherein one or more time subunits belonging to one time unit comprises only one gap Gap.

20. The resource determining method according to any one of claims 4 to 18, wherein one or more time subunits belonging to one time unit only comprises a part for automatic gain control.

21. The resource determining method according to any one of claims 4 to 18, wherein P time subunits belonging to one time unit comprise a total of P gaps Gaps, wherein P is a positive integer greater than or equal to 1.

22. The resource determining method according to any one of claims 4 to 18, wherein Q time subunits belonging to one time unit comprise Q parts for automatic gain control, wherein Q is a positive integer greater than or equal to 1.

23. The resource determining method according to any one of claims 4 to 18, wherein multiple time subunits belonging to one time unit are used for at least one of the following:
transmitting sidelink positioning reference signals from different terminals;
transmitting multiple sidelink positioning reference signals from one terminal; and
transmitting the multiple sidelink positioning reference signals.

24. The resource determining method according to claim 23, wherein the resource determining-related information part comprises multiple resource determining-related information subparts, and different resource determining-related information subparts correspond to different time subunits.

25. The resource determining method according to claim 24, wherein the resource determining-related information subpart comprises at least one of the following:
sidelink control information, wherein the sidelink control information is used for scheduling a sidelink positioning reference signal corresponding to the time subunit; or
a sensing signal for sensing a scheduling situation of the time subunit.

26. The resource determining method according to claim 24 or 25, wherein the multiple resource determining-related information subparts are used for at least one of the following:
being scheduled by one terminal for transmitting multiple sidelink positioning reference signals; and
being scheduled by multiple terminals for transmitting a sidelink positioning reference signal.

27. The resource determining method according to any one of claims 24 to 26, wherein the multiple resource determining-related information subparts do not overlap in time domain.

28. The resource determining method according to claim 27, wherein any one of the resource determining-related information subparts and a time subunit corresponding to the resource determining-related information subpart are temporally consecutive.

29. The resource determining method according to any one of claims 24 to 26, wherein the multiple resource determining-related information subparts overlap in time domain.

30. The resource determining method according to any one of claims 24 to 29, wherein the multiple resource determining-related information subparts do not overlap in frequency domain.

31. The resource determining method according to any one of claims 4 to 30, wherein the candidate resource further comprises a candidate frequency domain resource; wherein
the candidate frequency domain resource corresponding to the time subunit comprises K frequency domain resource parts.

32. The resource determining method according to claim 31, wherein frequency division multiplexing of a comb structure is performed on the K frequency domain resource parts, and a value of K is associated with a value of the comb structure.

33. The resource determining method according to claim 31 or 32, wherein the resource determining-related information part comprises multiple resource determining-related information subparts, and different resource determining-related information subparts correspond to different frequency domain resource parts.

34. The resource determining method according to any one of claims 31 to 33, wherein any one of the frequency domain resource parts corresponds to H multiplexed code domain resources, wherein a value of H is associated with a value of cyclic shift on the frequency domain resource part or a value of H is associated with an OCC value.

35. The resource determining method according to claim 34, wherein the resource determining-related information part comprises multiple resource determining-related information subparts, and different resource determining-related information subparts correspond to different code domain resource parts.

36. The resource determining method according to any one of claims 4 to 35, wherein the first time unit or the second time unit is used for transmitting or receiving a maximum of M physical sidelink shared channel demodulation reference signals; wherein
a value of M satisfies at least one of the following:
M is greater than or equal to M1, indicating that the first time unit or the second time unit is scheduled by a maximum of M1 terminals for transmitting or receiving physical sidelink shared channel demodulation reference signals; or
M is greater than or equal to M2, indicating that the first time unit or the second time unit is scheduled by one terminal for transmitting or receiving a maximum of M2 physical sidelink shared channel demodulation reference signals.

37. The resource determining method according to claim 36, wherein M=L×K×H, L is the number of time subunits in the first time unit or the second time unit, K is the number of multiplexed frequency domain resource parts in a frequency domain resource corresponding to any one of the time subunits, and H is the number of multiplexed code domain resources in any one of the frequency domain resource parts.

38. The resource determining method according to claim 36 or 37, wherein M1 is determined based on capability, resource pool, network configuration, or terminal configuration of a receive terminal.

39. The resource determining method according to any one of claims 36 to 38, wherein M2 is determined based on terminal capability, resource pool, network configuration, or terminal configuration of a transmit terminal.

40. The resource determining method according to any one of claims 4 to 35, wherein any one of symbols in the time subunit is used for transmitting or receiving a maximum of N physical sidelink shared channel demodulation reference signals; wherein
a value of N satisfies at least one of the following:
N is greater than or equal to M3, indicating that any one of the symbols is scheduled by a maximum of M3 terminals for transmitting or receiving physical sidelink shared channel demodulation reference signals; or
N is greater than or equal to M4, indicating that any one of the symbols is scheduled by one terminal for transmitting or receiving a maximum of M4 physical sidelink shared channel demodulation reference signals.

41. The resource determining method according to claim 40, wherein N=K×H, K is the number of multiplexed frequency domain resource parts in a frequency domain resource corresponding to any one of the time subunits, and H is the number of multiplexed code domain resources in any one of the frequency domain resource parts.

42. The resource determining method according to claim 40 or 41, wherein M3 is determined based on capability, resource pool, network configuration, or terminal configuration of the receive terminal.

43. The resource determining method according to any one of claims 40 to 42, wherein M4 is determined based on terminal capability, resource pool, network configuration, or terminal configuration of the transmit terminal.

44. The resource determining method according to any one of claims 1 to 43, wherein the determining, by the terminal, a target resource for transmitting the sidelink positioning reference signal from a candidate resource set formed by the candidate resource comprises at least one of the following:
determining, by the terminal, the target resource for transmitting the sidelink positioning reference signal from a first resource pool, wherein the first resource pool comprises the candidate resource set;
determining, by the terminal, the target resource for transmitting the sidelink positioning reference signal from an additional resource, wherein the additional resource comprises the candidate resource set; or
determining, by the terminal, the target resource for transmitting the sidelink positioning reference signal from a reserved resource, wherein the reserved resource comprises the candidate resource set.

45. The resource determining method according to any one of claims 1 to 44, wherein the determining, by the terminal, a target resource for transmitting the sidelink positioning reference signal from a candidate resource set formed by the candidate resource comprises:
determining, by the terminal based on indication information of the target resource, the target resource for transmitting the sidelink positioning reference signal from the candidate resource set formed by the candidate resource; wherein
the indication information of the target resource comprises at least one of the following items of the sidelink positioning reference signal:
time resource allocation indicator value;
start position and length of time domain;
time division multiplexing configuration of sidelink; and
resource pattern of the sidelink positioning reference signal or configuration information of the sidelink positioning reference signal.

46. The resource determining method according to any one of claims 1 to 44, wherein the determining, by the terminal, a target resource for transmitting the sidelink positioning reference signal from a candidate resource set formed by the candidate resource comprises:
the terminal determines, based on indication information of the resource determining-related information, the target resource for transmitting the sidelink positioning reference signal from the candidate resource set formed by the candidate resource; where
the indication information of the resource determining-related information comprises at least one of the following items of the sidelink positioning reference signal:
time resource allocation indicator value;
start position and length of time domain;
time division multiplexing configuration of sidelink; and
resource pattern of the sidelink positioning reference signal or configuration information of the sidelink positioning reference signal.

47. The resource determining method according to any one of claims 1 to 44, wherein the determining, by the terminal, a target resource for transmitting the sidelink positioning reference signal from a candidate resource set formed by the candidate resource comprises:
determining, by the terminal based on a first rule, the target resource for transmitting the sidelink positioning reference signal from the candidate resource set formed by the candidate resource.

48. The resource determining method according to any one of claims 44 to 46, wherein the determining, by the terminal, a target resource for transmitting the sidelink positioning reference signal from a candidate resource set formed by the candidate resource comprises:
detecting, by the terminal, the scheduling situation of the candidate resource in a second resource pool; and
determining, by the terminal based on the scheduling situation, the target resource for transmitting the sidelink positioning reference signal.

49. The resource determining method according to claim 48, wherein the second resource pool does not comprise the candidate resource set containing the target resource.

50. The resource determining method according to claim 48, wherein the second resource pool comprises the candidate resource set, and a resource set for scheduling physical sidelink shared channels is different from the candidate resource set.

51. The resource determining method according to any one of claims 1 to 50, wherein the indication information of the target resource comprises information of a resource window, and the resource window is used for sensing the scheduling situation of the candidate resource; wherein
the information of the resource window comprises at least one of the following:
a window length of the resource window; and
a sensing signal for sensing the scheduling situation of the candidate resource.

52. A resource determining apparatus, comprising:
a first determining module, configured to determine a candidate resource of a sidelink positioning reference signal; and
a second determining module, configured to determine a target resource for transmitting the sidelink positioning reference signal from a candidate resource set formed by the candidate resource; wherein
the candidate resource comprises a candidate time domain resource, and any one of the candidate time domain resource comprises at least one of the following:
a first time unit, wherein the first time unit is only used for transmitting the sidelink positioning reference signal; and
a second time unit, wherein the second time unit is used for transmitting the sidelink positioning reference signal and resource determining-related information.

53. A terminal, comprising a processor and a memory, wherein the memory stores a program or instruction capable of running on the processor, and when the program or instruction is executed by the processor, the resource determining method according to any one of claims 1 to 51 is implemented.

54. A readable storage medium, wherein the readable storage medium stores a program or instruction, and when the program or instruction is executed by a processor, the resource determining method according to any one of claims 1 to 51 is implemented.
